(19) **Europäisches Patentamt / European Patent Office / Office européen des brevets**

(11) **EP 4 742 790 A1**

(12) **EUROPEAN PATENT APPLICATION**
published in accordance with Art. 153(4) EPC

(43) Date of publication:
**13.05.2026 Bulletin 2026/20**

(21) Application number: **23958004.6**

(22) Date of filing: **09.11.2023**

(51) International Patent Classification (IPC):
***H04W 72/0446*** *(2023.01)*

(52) Cooperative Patent Classification (CPC):
**H04W 72/0446**

(86) International application number:
**PCT/CN2023/130840**

(87) International publication number:
**WO 2025/097397 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Yi
Dongguan, Guangdong 523860 (CN)**
• **XU, Jing
Dongguan, Guangdong 523860 (CN)**

(74) Representative: **Taor, Simon Edward William et al
Venner Shipley LLP
200 Aldersgate
London EC1A 4HD (GB)**

(54) **METHOD AND APPARATUS FOR DETERMINING TIME DOMAIN POSITION, DEVICE, AND
MEDIUM**

(57) The present application relates to the field of communications, and discloses a method and apparatus for determining a time domain position, a device, and a medium. The method comprises: receiving first configuration information, the first configuration information being used for determining a time domain position of a first uplink sub-band. The time domain position of the first uplink sub-band is determined on the basis of at least one of the following: a first period, a first sub-carrier interval, a first time domain range, a reference time unit group, first time domain position information, and second time domain position information. The time domain position of the first uplink sub-band can be determined by means of the first configuration information, so that both a receiver and a sender of the first configuration information can determine the time domain positions of the first uplink sub-band used for uplink transmission, thus improving the communication efficiency and reliability in a communication system.

310

First configuration information is received, the first configuration information being used to determine time-domain positions of a first uplink subband

**FIG. 3**

EP 4 742 790 A1

**Description**

TECHNICAL FIELD

The disclosure relates to the field of communications, and more particularly to, a method and apparatus for determining time-domain positions, a device and a medium.

BACKGROUND

When uplink transmission in a single carrier only occurs in some subbands, there is no feasible solution on how to determine time-domain positions of an uplink subband used for uplink transmission.

SUMMARY

Embodiments of the disclosure provide a method and apparatus for determining time-domain positions, a device, and a medium. The technical solutions are as follows.

According to an aspect of the disclosure, there is provided a method for determining time-domain positions, performed by a terminal device, the method including an operation as follows.

First configuration information is received, the first configuration information being used to determine time-domain positions of a first uplink subband.

Herein, the time-domain positions of the first uplink subband are determined according to at least one of: a first period, a first subcarrier spacing, a first time-domain range, a reference time unit group, first time-domain position information, or second time-domain position information.

According to an aspect of the disclosure, there is provided a method for determining time-domain positions, performed by a network device, the method including an operation as follows.

First configuration information is sent, the first configuration information being used to determine time-domain positions of a first uplink subband.

Herein, the time-domain positions of the first uplink subband are determined according to at least one of: a first period, a first subcarrier spacing, a first time-domain range, a reference time unit group, first time-domain position information, or second time-domain position information.

According to an aspect of the disclosure, there is provided an apparatus for determining time-domain positions, including a receiving module.

The receiving module is configured to receive first configuration information, the first configuration information being used to determine time-domain positions of a first uplink subband.

Herein, the time-domain positions of the first uplink subband are determined according to at least one of: a first period, a first subcarrier spacing, a first time-domain range, a reference time unit group, first time-domain position information, or second time-domain position information.

According to an aspect of the disclosure, there is provided an apparatus for determining time-domain positions, including a sending module.

The sending module is configured to send first configuration information, the first configuration information being used to determine time-domain positions of a first uplink subband.

Herein, the time-domain positions of the first uplink subband are determined according to at least one of: a first period, a first subcarrier spacing, a first time-domain range, a reference time unit group, first time-domain position information, or second time-domain position information.

According to an aspect of the disclosure, there is provided a terminal device, including: a processor; a transceiver coupled to the processor; and a memory for storing instructions executable by the processor, where the processor is configured to load and execute the instructions to perform the method for determining time-domain positions according to the aspect above.

According to an aspect of the disclosure, there is provided a network device, including: a processor; a transceiver coupled to the processor; and a memory for storing instructions executable by the processor, where the processor is configured to load and execute the instructions to perform the method for determining time-domain positions according to the aspect above.

According to an aspect of the disclosure, there is provided a computer-readable storage medium having stored thereon executable instructions loaded and executed by a processor to perform the method for determining time-domain positions according to the aspect above.

According to an aspect of the disclosure, there is provided a computer program product, including computer instructions stored in a computer-readable storage medium from which a processor of a computer device reads the computer instructions, where the processor executes the computer instructions to cause the computer device to perform the method for determining time-domain positions according to the aspect above.

According to one aspect of the disclosure, there is provided a chip, including a programmable logic circuit or a program, the chip being configured to perform the method for determining time-domain positions according to the aspect above.

According to an aspect of the disclosure, there is provided a computer program, including computer instructions executed by a processor of a computer device to cause the computer device to perform the method for determining time-domain positions according to the aspect above.

The technical solutions provided by the embodiments of the disclosure include at least the following beneficial effects.

The determination of the time-domain positions of the first uplink subband by the first configuration information is supported, so that both the sending end and the receiving end of the first configuration information can determine the time-domain positions of the first uplink subband, which is helpful to improve communication efficiency and reliability in a communication system.

## BRIEF DESCRIPTION OF THE DRAWINGS

In order to more clearly explain the technical solutions in the embodiments of the disclosure, the accompanying drawings that need to be used in the description of the embodiments will be briefly introduced below, and it is apparent that the accompanying drawings in the following description are only related to some embodiments of the disclosure, and for those skilled in the art, other accompanying drawings can be obtained from these accompanying drawings without creative efforts.

FIG. 1 illustrates a schematic diagram of frequency-domain positions of an uplink subband provided by some illustrative embodiments of the disclosure.

FIG. 2 illustrates a schematic diagram of a mobile communication system provided by some illustrative embodiments of the disclosure.

FIG. 3 illustrates a schematic flowchart of a method for determining time-domain positions provided by some illustrative embodiments of the disclosure.

FIG. 4 illustrates a schematic flowchart of a method for determining time-domain positions provided by some illustrative embodiments of the disclosure.

FIG. 5 illustrates a schematic diagram of a first period provided by some illustrative embodiments of the disclosure.

FIG. 6 illustrates a schematic diagram of a first period provided by some illustrative embodiments of the disclosure.

FIG. 7 illustrates a schematic diagram of a reference time unit group provided by some illustrative embodiments of the disclosure.

FIG. 8 illustrates a schematic diagram of a reference time unit group provided by some illustrative embodiments of the disclosure.

FIG. 9 illustrates a schematic diagram of a first time-domain range provided by some illustrative embodiments of the disclosure.

FIG. 10 illustrates a schematic diagram of a first time-domain sub-range and a second time-domain sub-range provided by some illustrative embodiments of the disclosure.

FIG. 11 illustrates a schematic diagram of a first time-domain range provided by some illustrative embodiments of the disclosure.

FIG. 12 illustrates a schematic diagram of a first time-domain range provided by some illustrative embodiments of the disclosure.

FIG. 13 illustrates a schematic diagram of time-domain positions determined according to a Start and Length Indicator Value (SLIV) provided by some illustrative embodiments of the disclosure.

FIG. 14 illustrates a schematic diagram of a bitmap provided by some illustrative embodiments of the disclosure.

FIG. 15 illustrates a schematic diagram of a bitmap provided by some illustrative embodiments of the disclosure.

FIG. 16 illustrates a schematic flowchart of a method for determining time-domain positions provided by some illustrative embodiments of the disclosure.

FIG. 17 illustrates a schematic flowchart of a method for determining time-domain positions provided by some illustrative embodiments of the disclosure.

FIG. 18 illustrates a structural diagram of an apparatus for determining time-domain positions provided by some illustrative embodiments of the disclosure.

FIG. 19 illustrates a structural diagram of an apparatus for determining time-domain positions provided by some illustrative embodiments of the disclosure.

FIG. 20 illustrates a schematic diagram of a communication device provided by some illustrative embodiments of the disclosure.

## DETAILED DESCRIPTION

In order to make the object, technical solution and advantages of the disclosure more clear, embodiments of the disclosure will be described in further detail below with reference to the accompanying drawings. Exemplary embodiments, examples of which are shown in the accompanying drawings, will be described in detail herein. In the following description made with reference to the drawings, the same numerals in different drawings denote the same or similar elements unless otherwise indicated. The implementations described in the following exemplary embodiments do not represent all implementations consistent with the disclosure. Rather, they are merely examples of devices and methods consistent with some aspects of the disclosure as detailed in the appended claims.

The terminology used in the disclosure is for the purpose of describing particular embodiments only and is not intended to limit the disclosure. As used in the disclosure and the appended claims, the singular forms "a" and "the" are also intended to include the plurality of forms unless the context clearly indicates otherwise. It should also be understood that the term "and/or" as used herein refers to including any or all possible combinations of one or more associated listed items.

It should be understood that although the terms first, second, third, etc. may be employed in the disclosure to describe various pieces of information, such information should not be limited to these terms. These terms are only used to distinguish the same type of information from each other. For example, the first information may also be referred to as the second information, and similarly, the second information may also be referred to as the first information without departing from the scope of the disclosure. Depending on the context, the word "if" as used herein may be interpreted as "at ..." or "when" or "in response to determining".

First, the communication technologies relating to the embodiments of the disclosure will be introduced.

Subband non-overlapping full duplex (SBFD)

In order to overcome the problems of weak Uplink (UL) coverage, large UL delay and insufficient UL capacity caused by less allocation of UL resources in Time Division Duplexing (TDD) technology, the SBFD technology is proposed. The SBFD technology refers to a technology that can simultaneously transmit and receive data on different subbands of a same subframe or a same slot or a same symbol. The SBFD technology is mainly used on the network device side, and the terminal device (or User Equipment (UE)) side still maintains the current state, that is, data are only transmitted or received on a same subframe/slot/symbol. The SBFD technology may also be referred to as the Cross Division Duplex (XDD) technology.

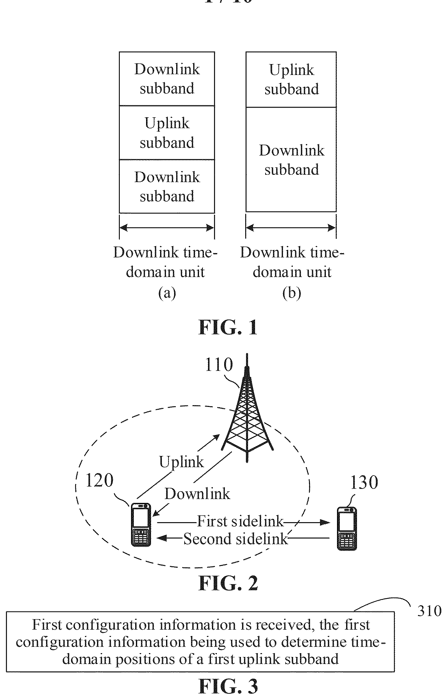

As an example, as shown in FIG. 1, the SBFD technique configures a part of frequency-domain resources corresponding to one Downlink (DL) time-domain unit as an uplink subband. As illustrated in FIG. 1 (a), an intermediate subband of the frequency-domain resources corresponding to one downlink time-domain unit is configured as an uplink subband; or as illustrated in FIG. 1 (b), an upper subband of frequency-domain resources corresponding to one downlink time-domain unit is configured as an uplink subband.

In general, the SBFD operations satisfy items as follows.

- The SBFD operates within a TDD carrier (or, SBFD operation within a TDD carrier).
- The SBFD scheme is designed in a single uplink and downlink pair with aligned center frequency points (or, SBFD scheme within a single configured DL and UL BWP pair with aligned center frequencies).
- Within one TDD carrier, there is at most one uplink subband on one SBFD symbol (including legacy uplink symbol) (or, up to one UL subband for SBFD operation in an SBFD symbol (excluding legacy UL symbol) within a TDD carrier). This one uplink subband may be located in the middle of the TDD carrier, or may be located on both sides of the TDD carrier.

This one uplink subband may be configured in DL symbol(s) and/or flexible symbol(s) configured by TDD uplink and downlink common configuration signaling (*TDD-UL-DL-ConfigurationCommon*).

For the configuration of SBFD subband, at least semi-static configuration is supported, which includes the following.

For semi-static configuration of subband time locations for SBFD operation, it is agreed that explicit configuration of SBFD subband time locations within a period is the baseline.

For semi-static configuration of subband frequency locations for SBFD operation, at least explicit indication of frequency location of UL subband is required.

TDD uplink and downlink common configuration *(TDD-UL-DL-ConfigurationCommon)*

The configuration of the slot structure may be indicated by semi-static uplink and downlink configuration signaling or dynamic uplink and downlink configuration signaling.

Herein, the semi-static uplink and downlink configuration signaling includes TDD uplink and downlink common configuration (*tdd-UL-DL-ConfigurationCommon*) signaling, and TDD uplink and downlink dedicated configuration (*tdd-UL-DL-ConfigurationDedicated*) signaling. The network device transmits *tdd-UL-DL-ConfigurationCommon* signaling to configure a common slot structure, that is, a slot structure applicable to all UEs in a cell. The TDD uplink and downlink common configuration signaling may configure a single period or dual periods. When a single period is configured, the period corresponds to a pattern, such as pattern 1. When the dual periods are configured, patterns corresponding to two periods are different, for example, one period corresponds to pattern 1, and the other period corresponds to pattern 2.

In each period, the network device may configure the slot structure in the pattern, and the main parameters include: reference subcarrier spacing $\mu_{ref}$; period P in milliseconds (ms); number of downlink slots $d_{slots}$; number of downlink symbols $d_{sym}$; number of uplink slots $u_{slots}$; number of uplink symbols $u_{sym}$.

The total number S of slots included in a period can be determined from the reference subcarrier spacing and the period. First $d_{slots}$ slots among the S slots represent full downlink slots, and first $d_{sym}$ symbols within a next slot of the last full downlink slot represent downlink symbols. Last $u_{slots}$ slots among the S slots represent full uplink slots, and last $u_{sym}$ symbols within a previous slot of the first full uplink slot represent uplink symbols. The remaining symbols within the period represent flexible symbols. Therefore, in a period, the overall configuration of the frame structure is also that downlink slots or symbols are in the front, uplink slots or symbols are in the end, and flexible slots or symbols are in the middle. The terminal may determine, according to *tdd-UL-DL-ConfigurationCommon,* the slot structure in one period, and the slot structure of all slots can be determined by repeating in the time-domain with the period P.

When the *tdd-UL-DL-ConfigurationCommon* configures two periods, that is, when pattern 1 (corresponding to the period P) and pattern 2 (corresponding to the period P2) are configured for the UE, the pattern 1 and the pattern 2 appear alternately in the time-domain, and P+P2 is divisible by 20 ms.

The information element *tdd-UL-DL-ConfigurationCommon* is used for indicating cell-level specific uplink/downlink TDD configuration (or, the IE TDD-UL-DL-ConfigCommon determines the cell specific Uplink/Downlink TDD configuration.

TDD-UL-DL-ConfigCommon information element

-- ASN1START

-- TAG-TDD-UL-DL-CONFIGCOMMON-START

```
TDD-UL-DL-ConfigCommon ::=          SEQUENCE {
    referenceSubcarrierSpacing      SubcarrierSpacing,
    pattern1                        TDD-UL-DL-Pattern,
    pattern2                                            TDD-UL-DL-Pattern
OPTIONAL, -- Need R
    ...
}
TDD-UL-DL-Pattern ::=               SEQUENCE {
    dl-UL-TransmissionPeriodicity       ENUMERATED  {ms0p5,  ms0p625,  ms1,
ms1p25, ms2, ms2p5, ms5, ms10},
    nrofDownlinkSlots               INTEGER (0..maxNrofSlots),
    nrofDownlinkSymbols             INTEGER (0..maxNrofSymbols-1),
    nrofUplinkSlots                 INTEGER (0..maxNrofSlots),
    nrofUplinkSymbols               INTEGER (0..maxNrofSymbols-1),
    ...,
    [[
    dl-UL-TransmissionPeriodicity-v1530                 ENUMERATED    {ms3,    ms4}
OPTIONAL -- Need R
    ]]
}
```

-- TAG-TDD-UL-DL-CONFIGCOMMON-STOP

-- ASN1STOP

However, in the above transmission technology, there is no feasible solution on how to specifically configure the time-domain positions of the uplink subband. Therefore, the disclosure provides a method and apparatus for determining time-domain positions, a device and a medium, and provides a specific and feasible solution for determining time-domain position of an uplink subband.

FIG. 2 illustrates a schematic diagram of a mobile communication system provided by illustrative embodiments of the disclosure. The mobile communication system includes a network device 110 and a terminal device 120, and may or may not include a terminal device 130, which is not limited in the disclosure.

The network device 110 in the disclosure provides wireless communication functions, including but not limited to: an Evolved Node B (eNB), a Radio Network Controller (RNC), a Node B (NB), a Base Station Controller (BSC), a Base Transceiver Station (BTS), a home base station (e.g., a Home Evolved Node B, or Home Node B (HNB)), a base band unit (BBU), an Access Point (AP), a Wireless Fidelity (Wi-Fi) system, a wireless relay node, a wireless Backhaul node, a Transmission Point (TP), or a Transmission and Reception Point (TRP), or the like; and it may also be a Next Generation Node B (gNB) or a transmission point (TRP or TP) in a 5th Generation (5G) mobile communication system, or one or a group (including a plurality of antenna panels) of panels of a base station in a 5G system; or, it may also be a network node constituting a gNB or a transmission point, such as a BBU or a Distributed Unit (DU) or the like, a base station or the like in a Beyond Fifth Generation (B5G) or a 6th Generation (6G) mobile communication system, a Core Network (CN), a Fronthaul (Backhaul), a Radio Access Network (RAN), a network slice or the like, or a serving cell, a Primary Cell (PCell), a Primary Secondary Cell (PSCell), a Special Cell (SpCell) or a Secondary Cell (Scell) of a terminal device, or the like.

The terminal device 120 in the embodiments of the disclosure may also be referred to as User Equipment (UE), an access terminal, a user unit, a user station, a mobile station, a remote station, a remote terminal, a mobile device, a user terminal, a terminal, a wireless communication device, a user agent or a user apparatus, etc. The terminal includes, but is not limited to, a handheld device, a wearable device, a vehicle device and an Internet of Things (IoT) device, such as a mobile phone, a tablet, an e-book reader, a laptop portable computer, a desktop computer, a television, a game console, a mobile Internet device (MID), an Augmented Reality (AR) terminal, a Virtual Reality (VR) terminal and a Mixed Reality (MR) terminal, an Extended Reality (XR) terminal, a Baffle Reality (BR) terminal, a Cinematic Reality (CR) terminal, a Deceive Reality (DR) terminal, a wearable device, a handle, an electronic tag, a controller, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular telephone, a cordless telephone, a Session Initiation Protocol (SIP) telephone, a Wireless Local Loop (WLL) station, a Personal Digital Assistant (PDA), a television Set Top Box (STB), a Customer Premise Equipment (CPE), and the like.

In some embodiments, the network device 110 and the terminal device 120 communicate with each other through some air interface technology, such as a Uu interface.

For example, there are two communication scenarios between the network device 110 and the terminal device 120: an uplink communication scenario and a downlink communication scenario. Herein, the uplink communication, or uplink transmission, is to send signals or data to the network device 110; and the downlink communication, or downlink transmission, is to send signals or data to the terminal device 120.

In some embodiments, the terminal device 120 and the terminal device 130 communicate with each other through some air interface technology, such as a PC5 interface.

For example, there are two kinds of communication scenarios between the terminal device 120 and the terminal device 130: a first sidelink communication scenario and a second sidelink communication scenario. Herein, the first sidelink communication is to send a signal to the terminal device 130; and the second sidelink communication is to send a signal to the terminal device 120.

In some embodiments, the terminal device 120 and the terminal device 130 are both within the network coverage and located in a same cell, or the terminal device 120 and the terminal device 130 are both within the network coverage but located in different cells, or the terminal device 120 is within the network coverage but the terminal device 130 is outside the network coverage.

The technical solutions provided by the embodiments of the disclosure can be applied to various communication systems, such as a Global System of Mobile communication (GSM) system, a Code Division Multiple Access (CDMA) system, and a Wideband Code Division Multiple Access (WCDMA) system, a General Packet Radio Service (GPRS), Long Term Evolution (LTE) system, a Frequency Division Duplex (FDD) system, a Time Division Duplex (TDD) system, an XDD system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolution system of the NR system, an LTE-based access to unlicensed spectrum (LTE-U) system, an NR-based access to unlicensed spectrum (NR-U) system, a Terrestrial Network (TN) system, a Non-Terrestrial Network (NTN) system, a Wireless Local Area Network (WLAN), a Wi-Fi system, a cellular Internet of Things system, and a cellular passive Internet of Things system, may also be applied to a subsequent evolution system of the 5G NR system, and may further be applied to the B5G, the 6G and and subsequent evolution system thereof. In some embodiments of the disclosure, the "NR" may also be referred to as a 5G NR system or a 5G system. The 5G mobile communication system may include Non-Standalone (NSA) and/or Standalone (SA).

The technical solutions provided by the embodiments of the disclosure may also be applied to a Machine Type Communication (MTC), a Long Term Evolution-Machine (LTE-M), a Device to Device (D2D) network, a Machine to Machine (M2M) network, and Internet of Things (IoT) network, or another network. Herein, the IoT network may include, for example, Internet of Vehicles (IoV). Herein, the communication modes in an IoV system are collectively referred to as vehicle to other devices (Vehicle to X, V2X, X may represent anything), and for example, the V2X may include: Vehicle to Vehicle (V2V) communication, Vehicle to Infrastructure (V2I) communication, Vehicle to Pedestrian (V2P) communication, Vehicle to Network (V2N) communication, and the like.

The mobile communication system provided by the embodiment of the disclosure may be applied to, but is not limited to, at least one of the following communication scenarios: an uplink communication scenario, a downlink communication scenario, and a sidelink communication scenario.

FIG. 3 is a schematic flowchart of a method for determining time-domain positions provided by some exemplary embodiments of the disclosure. Description is made schematically by taking the method being performed by a UE as an example, and the UE may be implemented as the terminal device 120 as shown in FIG. 1. The method includes at least some of the operations below.

**In operation 310,** first configuration information is received, the first configuration information being used to determine time-domain position(s) of a first uplink subband.

In the disclosure, the subband may also be referred to as a frequency subband. The uplink subband can be understood as a part of frequency-domain resources within a single carrier that are only used for uplink transmission.

In the disclosure, the time-domain positions of the first uplink subband may also be understood as time-domain unit(s) occupied by the first uplink subband.

In some embodiments, the fact that the first configuration information is used to determine the time-domain positions of the first uplink subband may be understood as that the first configuration information is used to indicate the time-domain positions of the first uplink subband, may also be understood as that the first configuration information is used to configure the time-domain positions of the first uplink subband, and may also be understood as hat the first configuration information is used to acquire the time-domain positions of the first uplink subband.

In the disclosure, the time-domain unit includes at least one of: a frame, a subframe, a slot, a mini-Slot, a sub-slot, a symbol, a symbol group, or a time-domain unit based on other time-domain units.

In some embodiments, the time-domain positions of the first uplink subband are determined by the UE according to the first configuration information.

In some embodiments, the time-domain positions of the first uplink subband are determined according to at least one of: a first period, a first subcarrier spacing, a first time-domain range, a reference time unit group, first time-domain position information, or second time-domain position information.

In some embodiments, the first time-domain position information includes one or more of a start indication value, a length indication value, and an end indication value.

In some embodiments, the second position information includes a bitmap.

In some embodiments, the first uplink subband is an uplink subband in the SBFD technology. It may also be understood that the first uplink subband is an uplink subband in the XDD technology. It may also be understood that the first uplink subband is an uplink subband corresponding to a time-domain unit supporting a first operation, and the first operation refers to a technique in which data can be sent and received simultaneously on different subbands corresponding to a same time-domain unit. Exemplarily, the first operation includes an SBFD operation. Exemplarily, the first operation includes an XDD operation. It can be understood that the first operation may also be referred to as another operation other than the SBFD operation and the XDD operation, such as a new term that may be agreed in future communication protocols, and the disclosure does not limit the specific naming of the first operation.

To sum up, the method provided by the embodiment of the disclosure supports the determination of the time-domain positions of the first uplink subband by the first configuration information, so that both the sending end and the receiving end of the first configuration information can determine the time-domain positions of the first uplink subband, which is helpful to improve communication efficiency and reliability in a communication system.

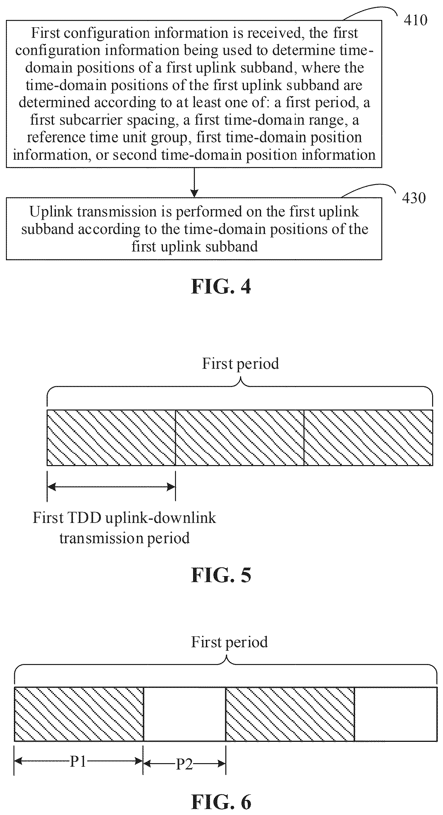

In some embodiments, the operation 310 may be implemented as an operation 410. Optionally, in addition to the operation 410, the method for determining the time-domain positions may further include an operation 430, as shown in FIG. 4.

FIG. 4 is a schematic flowchart of a method for determining time-domain positions provided by some exemplary embodiments of the disclosure. Description is made schematically by taking the method being performed by a UE as an example, and the UE may be implemented as the terminal device 120 as shown in FIG. 1. The method includes at least some of the operations below.

**In operation 410,** first configuration information is received, the first configuration information being used to determine time-domain position(s) of a first uplink subband, where the time-domain positions of the first uplink subband are determined according to at least one of: a first period, a first subcarrier spacing, a first time-domain range, a reference time unit group, first time-domain position information, or second time-domain position information.

In some embodiments, the first configuration information includes at least one of: a first period, a first subcarrier spacing, a first time-domain range, a reference time unit group, first time-domain position information, or second time-domain position information.

In some embodiments, the first time-domain range includes all or a part of time-domain units within the first period.

In some embodiments, the first configuration information is used to determine the time-domain positions of the first uplink subband within the first period.

In some embodiments, the first configuration information is used to determine the time-domain positions of the first uplink subband within the first time-domain range in the first period.

### 1. **Regarding the first period**

In some embodiments, the time-domain positions of the first uplink subband are determined according to the first period.

In some embodiments, the time-domain positions of the first uplink subband are determined according to the first period and the first subcarrier spacing.

In some embodiments, the time-domain positions of the first uplink subband are determined according to the first period and the first time-domain range.

In some embodiments, the time-domain positions of the first uplink subband are determined according to the first period and the reference time unit group.

In some embodiments, the time-domain positions of the first uplink subband are determined according to the first period and the first time-domain position information.

In some embodiments, the time-domain positions of the first uplink subband are determined according to the first period and the second time-domain position information.

In some embodiments, the first configuration information is used to determine the time-domain positions of the first uplink subband within the first period. Herein, the time-domain positions of the first uplink subband within the first period may be understood as positions of time-domain units occupied by the first uplink subband in the first period, or may also be understood as the time-domain units occupied by the first uplink subband within the first period. Exemplarily, the first period is denoted as T.

In some embodiments, the first period is related to a first operation. Herein, the first operation may be referred to as an SBFD operation, an XDD operation, or the like, and for related content, reference may be made to the operation 310, which will not be repeatedly described here.

In some embodiments, the first period is a period by which configuration indication of the first operation is referenced.

In some embodiments, the first period may be understood as one period used for SBFD configuration indication, or may be understood as one period used for XDD configuration indication.

In some embodiments, the first period may be referred to as an SBFD period, and may also be referred to as an XDD period.

In some embodiments, the first period is agreed by a communication protocol, or configured by the first configuration information.

In the embodiments of the disclosure, determination methods of the first period include at least three determination methods as follows.

**In** a first determination method, determination is made according to a first Time Division Duplexing (TDD) uplink-downlink transmission period.

In some embodiments, the first period is determined according to a first TDD uplink-downlink transmission period, or the first period is determined according to the first TDD uplink-downlink transmission period and a first parameter X, X being an integer greater than 1.

In some embodiments, the first period is the first TDD uplink-downlink transmission period, which can be understood as that the first period is the same as the first TDD uplink-downlink transmission period. In this case, the design of the first period is very simple and has the advantage of low complexity.

In some embodiments, the first period is X times the first TDD uplink-downlink transmission period. For example, as shown in FIG. 5, taking X equal to 3 as an example, the first period is three times the first TDD uplink-downlink transmission period. In this case, the first period includes a plurality of first TDD uplink-downlink transmission periods. In this case, the design of the first period is more flexible, and by configuring the same number or different numbers of time-domain units related to the first operation for X first TDD uplink-downlink transmission periods, it is possible to better adapt to different uplink transmission capacity requirements and delay requirements in different TDD uplink-downlink transmission periods.

Herein, the time-domain unit related to the first operation can be understood as a time-domain unit in which uplink transmission is performed by the first operation. It can also be understood as a time-domain unit in which a communication technology related to the first operation is used when the uplink transmission is performed. It can also be understood as a time-domain unit having a communication characteristic of the first operation.

In some embodiments, the first period is configured by first signaling. In the embodiments of the disclosure, the first signaling is used to configure TDD uplink and downlink common parameters. Since the first signaling configures only the first TDD uplink-downlink transmission period, it can be considered that aTDD frame structure configured by the first signaling at this time is of single-period.

In some embodiments, the pattern of the first TDD uplink-downlink transmission period is a first pattern, which may be also understood as that the first signaling configures only the first pattern.

In some embodiments, the first signaling includes t*dd-UL-DL-ConfigurationCommon* signaling.

In some embodiments, X is agreed by a communication protocol, or configured by the first configuration information.

**In** a second determination method, determination is made according to the first TDD uplink-downlink transmission period and a second TDD uplink-downlink transmission period.

In some embodiments, the first period is determined according to a first TDD uplink-downlink transmission period and a second TDD uplink-downlink transmission period, or the first period is determined according to the first TDD uplink-downlink transmission period, the second TDD uplink-downlink transmission period and a second parameter Y, Y being an integer greater than 1.

In some embodiments, the first period is a sum of the first TDD uplink-downlink transmission period and the second TDD uplink-downlink transmission period, which can be understood as that the first period includes the first TDD uplink-downlink transmission period and the second TDD uplink-downlink transmission period. In this case, since the first TDD uplink-downlink transmission period and the second TDD uplink-downlink transmission period may be different in time-domain length, frame structure, and the like, they may naturally have different uplink and downlink performances. By flexibly designing the first TDD uplink-downlink transmission period and the second TDD uplink-downlink transmission period, the first period is enabled to be more easily adapted to different uplink transmission capacity requirements and delay requirements, and the transmission flexibility is greatly improved.

In some embodiments, the first period is Y times the sum of the first TDD uplink-downlink transmission period and the second TDD uplink-downlink transmission period. For example, as shown in FIG. 6, the first TDD uplink-downlink transmission period is P1, and the second TDD uplink-downlink transmission period is P2. Taking Y equal to 2 as an example, the first period is twice the sum of the first TDD uplink-downlink transmission period and the second TDD uplink-downlink transmission period, that is, the first period is twice the P1+P2. In this case, both of the following are supported: designing the first TDD uplink-downlink transmission period and the second TDD uplink-downlink transmission period flexibly to enable the first period to be more easily adapted to delay requirements, capacity requirements, reliability requirements and the like in different communication scenarios, and configuring a same number or different numbers of time-domain units related to the first operation for Y first TDD uplink-downlink transmission periods and Y second TDD uplink-downlink transmission periods to better adapt to different uplink transmission capacity requirements and delay requirements in different TDD uplink-downlink transmission periods.

In some embodiments, Y is agreed by a communication protocol, or configured by the first configuration information.

In some embodiments, the first TDD uplink-downlink transmission period and the second TDD uplink-downlink transmission period are configured by first signaling. The first signaling is used to configure TDD uplink and downlink common parameters. Since the first signaling configures the first TDD uplink-downlink transmission period and the second TDD uplink-downlink transmission period, it can be considered that the TDD frame structure configured by the first signaling at this time is of dual-period.

In some embodiments, the patterns of the first TDD uplink-downlink transmission period and the second TDD uplink-downlink transmission period are different, which may be also understood as that the first signaling configures a first pattern and a second pattern. Exemplarily, the pattern of the first TDD uplink-downlink transmission period is the first pattern (such as Pattern 1), and the pattern of the second TDD uplink-downlink transmission period is the second pattern (such as Pattern 2).

**In a third determination method,** determination is made according to the first configuration information.

In some embodiments, the first configuration information includes configuration of the first period, which may be understood as that the first period is configured by the first configuration information. Therefore, the UE may acquire the first period according to the configuration of the first configuration information.

In some embodiments, the configuration of the first period includes one or more of: a time-domain length of the first period, a start time-domain unit of the first period, and an end time-domain unit of the first period.

It is to be noted that the above three methods for determining the first period may be used alone or in combination.

The following introduces the relevant content of combined use.

In some embodiments, the first configuration information configures that the first period is an integer multiple of the TDD uplink-downlink transmission period.

In some embodiments, the first configuration information configures that the first period is the first TDD uplink-downlink transmission period, or the first period is X times the first TDD uplink-downlink transmission period. When the first signaling configures the first TDD uplink-downlink transmission period, the UE determines the first period according to the first configuration information and the first signaling. This case can be considered as a combined use of the third determination method and the first determination method.

In some embodiments, the first configuration information configures that the first period is a sum of the first TDD uplink-downlink transmission period and the second TDD uplink-downlink transmission period, or the first period is Y times the sum of the first TDD uplink-downlink transmission period and the second TDD uplink-downlink transmission period When the first signaling configures the first TDD uplink-downlink transmission period and the second TDD uplink-downlink transmission period, the UE determines the first period according to the first configuration information and the first signaling. This case can be considered as a combined use of the third determination method and the second determination method.

In some embodiments, the first signaling does not configure any TDD uplink-downlink transmission period, then the UE can only determine the first period by using the third determination method alone.

In some embodiments, the first period satisfies at least one of: the UE expects the first period to be divisible by 20 ms; the UE expects the first period to be an integer multiple of a first TDD uplink-downlink transmission period; or the UE expects the first period to be an integer multiple of a sum of the first TDD uplink-downlink transmission period and a second TDD uplink-downlink transmission period.

Herein, if the UE expects the first period to be divisible by 20 ms, the UE can period through an integer multiple of the first period within one counting period (10240 ms) of the frame structure, so as to avoid the problem that the first period spans the counting period.

In some embodiments, the UE expects that the dual periods and a first operation are not configured at the same time. Exemplarily, when the first signaling configures the first TDD uplink-downlink transmission period and the second TDD uplink-downlink transmission period, the UE does not expect to configure the first operation including, for example, an SBFD operation, an XDD operation, or the like. Exemplarily, when the UE is configured with the first operation, the UE does not expect the first signaling to configure the first TDD uplink-downlink transmission period and the second TDD uplink-downlink transmission period, or the UE does not expect the first signaling to configure the first pattern and the second pattern. Such a design may simplify UE-side behavior, simplify transmissions related to the first operation, and particularly reduce the complexity of the first period.

2. **Regarding the first** subcarrier **spacing**

In some embodiments, the time-domain positions of the first uplink subband are determined according to the first subcarrier spacing. Exemplarily, the first subcarrier spacing is denoted as $\mu$.

In some embodiments, the first subcarrier spacing is related to a first operation. Herein, the first operation may be referred to as an SBFD operation, an XDD operation, or the like, and for related content, reference may be made to the operation 310, which will not be repeatedly described here.

In some embodiments, the first subcarrier spacing is a subcarrier spacing by which configuration indication of the first operation is referenced.

In some embodiments, the first subcarrier spacing may be understood as one subcarrier spacing used for SBFD configuration indication, or may be understood as one subcarrier spacing used for XDD configuration indication.

In some embodiments, the first subcarrier spacing may be referred to as an SBFD subcarrier spacing, or may also be referred to as an SBFD reference subcarrier spacing, or may also be referred to as an XDD subcarrier spacing, or may also be referred to as an XDD reference subcarrier spacing.

In some embodiments, the first subcarrier spacing is configured by the first configuration information, or the first subcarrier spacing is agreed by a communication protocol.

In some embodiments, the first subcarrier spacing is less than or equal to a second subcarrier spacing. Herein, the second subcarrier spacing is configured by first signaling, and the first signaling is used to configure TDD uplink and downlink common parameters. Such a design can avoid as much as possible a plurality of TDD time-domain units sharing 1-bit indication of the first operation when the indication of the first operation is performed. This is because if the first subcarrier spacing is larger than the second subcarrier spacing, for example, when the first subcarrier spacing is 30 kHz and the second subcarrier spacing is 15 kHz, one symbol related to the first operation corresponds to two TDD symbols, and when the TDD symbol is used for indication of the first operation at the symbol level (or per-symbol), a 1-bit indication of the first operation corresponds to two TDD symbols. However, in such a case where a plurality of TDD symbols share the 1-bit indication of the first operation, it is not possible to ensure the accuracy and precision of the indication of the first operation. Similarly, when the first operation is indicated at the slot level (or per-slot), the first subcarrier spacing that is larger than the second subcarrier spacing is also not conducive to ensuring the accuracy and precision of the indication of the first operation.

Herein, the symbol related to the first operation can be understood as a symbol in which uplink transmission is performed by the first operation. It can also be understood as a symbol in which a communication technology related to the first operation is used when the uplink transmission is performed. It can also be understood as a symbol having a communication characteristic of the first operation.

The TDD symbol may be understood as a basic unit configured by the first signaling, may also be understood as a symbol for uplink transmission by the TDD technology, or may also be understood as a symbol in which the TDD technology is adopted when the uplink transmission is performed. It can also be understood as a symbol having a communication characteristic of the TDD technology.

Exemplarily, the first signaling includes *tdd-UL-DL-ConfigurationCommon* signaling, and the second subcarrier spacing is a reference subcarrier spacing configured by the *tdd-UL-DL-ConfigurationCommon* signaling.

In some embodiments, the first subcarrier spacing is less than or equal to a subcarrier spacing of a first Bandwidth Part (BWP). The first BWP includes any uplink BWP on the first carrier, and/or any downlink BWP on the first carrier. The first carrier is a carrier where the first uplink subband is located. Such a design can avoid the situation of collision of determinations as much as possible when the first operation of the first BWP is determined. This is because if the first subcarrier spacing is greater than the subcarrier spacing of the first BWP, for example, when the first subcarrier spacing is 30 kHz and the subcarrier spacing of the first BWP is 15 kHz, assuming that indication of the first operation is performed at the symbol level (or per-symbol) for the first BWP, that is, whether to perform the first operation is indicated for each symbol corresponding to the first BWP, then one symbol corresponding to the first BWP may correspond to a 2-bit indication, but the 2-bit indication may generate a conflict, for example, the value of one bit is "1" and the value of the other bit is "0", which cannot accurately indicate whether the first operation is performed at a symbol corresponding to the first BWP. Similarly, in the case where indication of the first operation is perfomed at the slot level (or per-slot) for the first BWP, if the first subcarrier spacing is larger than the subcarrier spacing of the first BWP, the problem of indication collision may occur, which affects the accuracy and reliability of indicating the first operation.

### 3. Regarding the reference time unit group

In some embodiments, the time-domain positions of the first uplink subband are determined according to the reference time unit group.

In some embodiments, the reference time unit group is a reference time unit group related to a first operation. The design of the reference time unit group can also be understood as the design of the indication granularity of the first operation. Herein, the first operation may be referred to as an SBFD operation, an XDD operation, or the like, and for related content, reference may be made to the operation 310, which will not be repeatedly described here.

Exemplarily, the reference time unit group is denoted as G.

In some embodiments, the reference time unit group is a reference time unit group by which configuration indication of the first operation is referenced. The reference time unit group may also be referred to as a time unit group.

In some embodiments, the reference time unit group may be understood as a reference time unit group of the SBFD operation, may also be understood as a reference time unit group of the XDD operation, may also be understood as an indication granularity of the SBFD operation, or may also be understood as an indication granularity of the XDD operation.

In some embodiments, a number of time-domain units within the reference time unit group is agreed by a communication protocol, or configured by the first configuration information, or determined by the UE.

In some embodiments, one reference time unit group includes a first number of slots, the first number being an integer greater than or equal to 1.

In some embodiments, the first number is agreed by a communication protocol, or configured by the first configuration information, or determined by the UE.

In some embodiments, the first number of slots are consecutive or non-consecutive.

In some embodiments, one reference time unit group includes a second number of sub-slots, the second number being an integer greater than or equal to 1.

In some embodiments, the second number is agreed by a communication protocol, or configured by the first configuration information, or determined by the UE.

In some embodiments, the second number of sub-slots are consecutive or non-consecutive.

In some embodiments, one reference time unit group includes a third number of symbols, the third number being an integer greater than or equal to 1.

In some embodiments, the third number is agreed by a communication protocol, or configured by the first configuration information, or determined by the UE.

In some embodiments, the third number of symbols are consecutive or non-consecutive.

In some embodiments, one reference time unit group includes a fourth number of symbol groups, the fourth number being an integer greater than or equal to 1. Herein, one symbol group includes a plurality of symbols, which may be consecutive or non-consecutive.

In some embodiments, the fourth number is agreed by a communication protocol, or configured by the first configuration information, or determined by the UE.

In some embodiments, the fourth number of symbols are consecutive or non-consecutive.

In some embodiments, one reference time unit group includes: $G_1$ slots, or $G_2$ symbols. Herein, $G_1$ is an integer greater than or equal to 1, and $G_2$ is an integer greater than or equal to 1.

In some embodiments, one reference time unit group includes 1 slot. Or, one reference time unit group includes 1 symbol. Or, one reference time unit group includes 1 sub-slot. Or, one reference time unit group includes 1 symbol group. The design of the indication granularity such as single slot, single symbol, single sub-slot or single symbol group can realize refined indication and has good accuracy and flexibility, but the number of bits required for indication is large, and the use of transmission resources may generate a burden.

In some embodiments, one reference time unit group includes a plurality of slots. Or, one reference time unit group includes a plurality of symbols. Or, one reference time unit group includes a plurality of sub-slots. Or, one reference time unit group includes a plurality of symbol groups. The design of the indication granularity such as multiple slots, multiple symbols, multiple sub-slots or multiple symbol groups can reduce the number of bits required for indication and save transmission resources.

In some embodiments, one or more indication granularities are used when the time-domain positions of the first uplink subband are determined by referencing the time unit group. It may also be understood that the time-domain positions of the first uplink subband may be determined by a same reference time unit group or different reference time unit groups.

In some embodiments, the time-domain positions of the first uplink subband are determined by the reference time unit group including $G_1$ slots, that is, the indication granularity is $G_1$ slots. Then, the first uplink subband occupies one or more slots within the time-domain, that is, the time-domain positions of the first uplink subband are certain slots. Exemplarily, the time-domain positions of the first uplink subband are slot N1 to slot N3. Exemplarily, the time-domain positions of the first uplink subband are slot N1, slot N3, and slot N6.

In some embodiments, the time-domain positions of the first uplink subband are determined by the reference time unit group including $G_2$ symbols, that is, the indication granularity is $G_2$ symbols. Then, the first uplink subband occupies one or more symbols within the time-domain, that is, the time-domain positions of the first uplink subband are certain symbols. Exemplarily, the time-domain positions of the first uplink subband are symbol 1 to symbol 5. Exemplarily, the time-domain positions of the first uplink subband are symbols 1, 3 and 6.

In some embodiments, the time-domain positions of the first uplink subband are determined jointly by the reference time unit group including $G_1$ slots and the reference time unit group including $G_2$ symbols, that is, the indication granularity includes $G_1$ slots and $G_2$ symbols. Then, the first uplink subband occupies both one or more slots and one or more symbols within the time-domain. The method of jointly determining the time-domain positions through different indication granularities improves the determination flexibility and can meet the requirements of determining various time-domain positions.

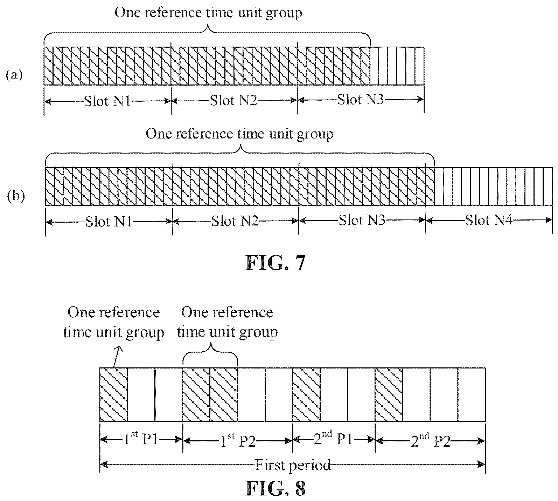

For example, as shown in (a) of FIG. 7, one reference time unit group A includes 1 slot, one reference time unit group B includes 4 symbols, and the time-domain positions of the first uplink subband are determined, by the reference time unit group A and the reference time unit group B, to be the slot N1, the slot N2, and first 8 symbols of the slot N3. Here, the slot N1 and the slot N2 are determined by two reference time unit groups A, and the first 8 symbols of the slot N3 are determined by two reference time unit groups B.

For example, as shown in (b) of FIG. 7, one reference time unit group A includes 2 slots, one reference time unit group B includes 5 symbols, and the time-domain positions of the first uplink subband are determined, by the reference time unit group A and the reference time unit group B, to be the slots N1 to N3 and the first symbol of the slot N4. The slot N1 and the slot N2 are determined by one reference time unit group A, and the slot N3 and the first symbol of the slot N4 are determined by three reference time unit groups B.

In some embodiments, the reference time unit group is agreed by a communication protocol, or configured by the first configuration information, or determined by the UE.

In some embodiments, the reference time unit group is determined by the UE according to a first time-domain range and a bitmap. Exemplarily, the reference time unit group is obtained by the UE through calculation according to a length of the first time-domain range and a number of bits in the bitmap.

In some embodiments, considering that the first period may be an integer multiple of the first TDD uplink-downlink transmission period, or the first period may be a sum of the first TDD uplink-downlink transmission period and the second TDD uplink-downlink transmission period, or the first period may be an integer multiple of the sum of the first TDD uplink-downlink transmission period and the second TDD uplink-downlink transmission period, indication granularities corresponding to respective TDD periods within the first period may be the same or different. That is, the embodiment of the disclosure supports flexible design of the indication granularity of each TDD period in the first period, which greatly improves the flexibility of determination, and can meet the determination requirements in different communication scenarios.

In some embodiments, the reference time unit group within each TDD period within the first period is agreed by a communication protocol, or configured by the first configuration information.

In some embodiments, the reference time unit group within a part of TDD periods within the first period is agreed by a communication protocol, or the reference time unit group within another part of the TDD periods is configured by the first configuration information.

Exemplarily, the first TDD uplink-downlink transmission period is P1, the first period is three times the P1, and the reference time unit group within the first P1 within the first period includes 1 slot, that is, the indication granularity within the first P1 is 1 slot. The reference time unit group within the second P1 within the first period includes 2 symbols, that is, the indication granularity within the second P1 is 2 symbols.

Exemplarily, as shown in FIG. 8, the first TDD uplink-downlink transmission period is P1, the second TDD uplink-downlink transmission period is P2, and the first period is (P1+P2) $\times$ 2. The reference time unit group within the first P1 within the first period includes 1 slot, that is, the indication granularity within the first P1 is 1 slot. The reference time unit group within the first P2 includes 2 slots, that is, the indication granularity in the first P2 is 2 slots. The reference time unit group within the second P1 includes 1 slot, that is, the indication granularity in the second P1 is 1 slot. The reference time unit group within the second P2 includes 1 slot, that is, the indication granularity in the second P2 is 1 slot.

## 4. Regarding the first time-domain range

In some embodiments, the time-domain positions of the first uplink subband are determined according to the first time-domain range. Exemplarily, the first time-domain range is denoted as *M.*

In some embodiments, the first configuration information is used to determine the time-domain positions of the first uplink subband within the first time-domain range in the first period. Herein, the time-domain positions of the first uplink subband within the first time-domain range in the first period may be understood as positions of time-domain units occupied by the first uplink subband within the first time-domain range in the first period, or may also be understood as the time-domain units occupied by the first uplink subband within the first time-domain range in the first period.

In some embodiments, the first time-domain range is related to a first operation. Herein, the first operation may be referred to as an SBFD operation, an XDD operation, or the like, and for related content, reference may be made to the operation 310, which will not be repeatedly described here.

In some embodiments, the first time-domain range is a time-domain range indicated by configuration of the first operation.

In some embodiments, the first time-domain range is a time-domain action range of the first operation. It is to be understood that the first operation will only act within the first time-domain range, and the first operation will not be performed in a time-domain range other than the first time-domain range.

In some embodiments, the first time-domain range may be understood as a time-domain action range of the SBFD operation, and therefore, the SBFD operation will not be performed within the time-domain range other than the first time-domain range. The first time-domain range may also be understood as a time-domain action range of the XDD operation, and therefore, the XDD operation will not be performed within the time-domain range other than the first time-domain range.

In some embodiments, the first time-domain range is a time-domain action range of the first configuration information. It may be understood that the first configuration information is only applicable to the first time-domain range, and a time-domain range other than the first time-domain range is not applicable to the first configuration information, or it may be understood that the first configuration information determines the first operation within the first time-domain range.

In some embodiments, the first time-domain range is agreed by a communication protocol, or configured by the first configuration information, or determined by the UE.

In some embodiments, the first time-domain range is determined according to at least one of: uplink slots within the first period; downlink slots within the first period; flexible slots within the first period; uplink symbols within the first period; downlink symbols within the first period; or flexible symbols within the first period.

In the embodiments of the disclosure, the uplink slot refers to a slot in which all symbols are used for uplink transmission. The downlink slot refers to a slot in which all symbols are used for downlink transmission.

In some embodiments, the flexible slot refers to a slot including flexible symbols, or refers to a slot in which all symbols are flexible symbols, or refers to a slot including flexible symbols and not including uplink symbols.

In some embodiments, the first time-domain range includes all slots within the first period. In this case, the implementation is simple and the complexity is low, but the number of bits required to determine the first time-domain range is large.

In some embodiments, the first time-domain range includes remaining slots other than uplink slots among all slots within the first period. In this case, since the slot(s) in which all symbols are used for uplink transmission has/have been removed, it is possible to ensure that all downlink symbols and flexible symbols can be indicated as the first operation, and it is possible to ensure that the action range of the first operation in the time-domain is sufficiently large, but it is possible to result in a condition where some uplink symbols are also determined into the time-domain action range of the first operation, and there may be an error.

In some embodiments, the first time-domain range includes remaining slots other than first slots among all slots within the first period, the first slots being slots including uplink symbols. In this case, it can be guaranteed that the uplink symbols are not determined to be included in the time-domain action range of the first operation, but since a slot is removed as long as the uplink symbol is included therein, it is possible to result in a condition where some flexible slots withincluding the uplink symbols are not indicated as the first operation, and there will objectively be a possibility that the time-domain action range of the first operation is reduced.

In some embodiments, the first time-domain range includes downlink slots within the first period. In this case, only a slot in which all symbols are used for downlink transmission can be indicated as the first operation, which may lead to some flexible slots not being indicated as the first operation, and there will objectively be a possibility that the time-domain action range of the first operation is reduced.

In some embodiments, the first time-domain range includes downlink slots and flexible slots within the first period. If the flexible slot does not include uplink symbols, the time-domain action range of the first operation determined in this case is the most accurate. If the flexible slot refers to a slot including flexible symbols, it may cause some uplink symbols to also be determined into the time-domain action range of the first operation, and there will be an error.

In some embodiments, the first time-domain range includes all symbols within the first period. In this case, the implementation is simple and the complexity is low, but the number of bits required to determine the first time-domain range is large.

In some embodiments, the first time-domain range includes remaining symbols other than uplink symbols among all symbols within the first period. In this case, the time-domain action range of the first operation is the most accurate.

In some embodiments, the first time-domain range includes all downlink symbols within the first period. In this case, it is possible to result in a condition where some flexible symbols are not indicated as the first operation, and there will objectively be a possibility of reducing the time-domain action range of the first operation.

In some embodiments, the first time-domain range includes downlink symbols and flexible symbols within the first period. In this case, the time-domain action range of the first operation is the most accurate.

In some embodiments, the first time-domain range includes a time-domain range formed from a first one of slots to a last one of downlink slots within the first period. In this case, the implementation is simple, but it is possible to result in a condition where some flexible symbols are not indicated as the first operation, and there will objectively be a possibility of reducing the time-domain action range of the first operation.

In some embodiments, the first time-domain range includes a time-domain range formed from the first one of slots to a last one of flexible slots within the first period. If the flexible slot does not include uplink symbols, the time-domain action range of the first operation in this case is the most accurate. If the flexible slot refers to a slot including flexible symbols, it may cause some uplink symbols to also be determined into the time-domain action range of the first operation, and there will be an error.

In some embodiments, the first time-domain range includes a time-domain range formed from a first one of symbols to a last one of downlink symbols within the first period. In this case, the implementation is simple, but it is possible to result in a condition where some flexible symbols are not indicated as the first operation, and there will objectively be a possibility of reducing the time-domain action range of the first operation.

In some embodiments, the first time-domain range includes a time-domain range formed from the first one of symbols to a last one of flexible symbols within the first period. In this case, the time-domain action range of the first operation is the most accurate.

In some embodiments, the first time-domain range includes a time-domain range formed from the first one of slots to the last one of downlink symbols within the first period.

In some embodiments, the first time-domain range includes a time-domain range formed from the first one of slots to the last one of flexible symbols within the first period.

In some embodiments, the first time-domain range includes a time-domain range formed from the first one of symbols to the last one of downlink slots within the first period.

In some embodiments, the first time-domain range includes a time-domain range formed from the first one of symbols to the last one of flexible slots within the first period.

In some embodiments, the time-domain range is determined according to the first period and/or the first subcarrier spacing. Exemplarily, the first period is denoted as T, the first subcarrier spacing is denoted as $\mu$, and the first time-domain range is denoted as M.

In some embodiments, $M = T * 2^{\mu}$ slots, which is equivalent to the case where "the first time-domain range includes all slots within the first period" described above.

In some embodiments, $M = T * 2^{\mu} - D_1$ slots, where $D_1$ is the number of uplink slots within the first period. This is equivalent to the case where "the first time-domain range includes remaining slots other than uplink slots among all slots within the first period" described above.

In some embodiments, $M = T * 2^{\mu} - D_2$ slots, where $D_2$ is the number of first slots within the first period. This is equivalent to the case where "the first time-domain range includes remaining slots other than first slots among all slots within the first period" described above. The first slots are slots including uplink symbols.

In some embodiments, $M = D_3$ slots, where $D_3$ is the number of downlink slots within the first period, that is, the number of downlink slots among $T * 2^{\mu}$ slots. This is equivalent to the case where "the first time-domain range includes downlink slots within the first period" described above.

In some embodiments, $M = D_3 + D_4$ slots. In some embodiments, $D_3$ is the number of downlink slots within the first period, that is, the number of downlink slots among $T * 2^{\mu}$ slots. $D_4$ is the number of flexible slots within the first period, that is, the number of flexible slots among $T * 2^\mu$ slots. This is equivalent to the case where "the first time-domain range includes downlink slots and flexible slots within the first period" described above.

In some embodiments, $M = T * 2^\mu * N_{symbol}^{slot}$ symbols. Herein, $N_{symbol}^{slot}$ refers to the number of symbols within a slot, exemplarily, 14 symbols within a slot, or 7 symbols within a slot, etc. There is no limit on the value of $N_{symbol}^{slot}$ in the disclosure, and adjustment of the value according to the actual situation is supported. This is equivalent to the case where "the first time-domain range includes all symbols within the first period" described above.

In some embodiments, $M = T * 2^\mu * N_{symbol}^{slot} - Q_1$ symbols. Herein, $Q_1$ is the number of uplink symbols within the first period. This is equivalent to the case where "the first time-domain range includes remaining symbols other than uplink symbols among all symbols within the first period" described above.

In some embodiments, $M = Q_2$ symbols. In some embodiments, $Q_2$ is the number of downlink symbols within the first period, that is, the number of downlink symbols among $T * 2^\mu * N_{symbol}^{slot}$ symbols. This is equivalent to the case where "the first time-domain range includes downlink symbols within the first period" described above.

In some embodiments, $M = Q_2 + Q_3$ symbols. In some embodiments, $Q_2$ is the number of downlink symbols within the first period, that is, the number of downlink symbols among $T * 2^\mu * N_{symbol}^{slot}$ symbols. In some embodiments, $Q_3$ is the number of flexible symbols within the first period, that is, the number of flexible symbols among $T * 2^\mu * N_{symbol}^{slot}$ symbols. This is equivalent to the case where "the first time-domain range includes downlink symbols and flexible symbols within the first period" described above.

In some embodiments, the first period is the first TDD uplink-downlink transmission period that corresponds to a first pattern.

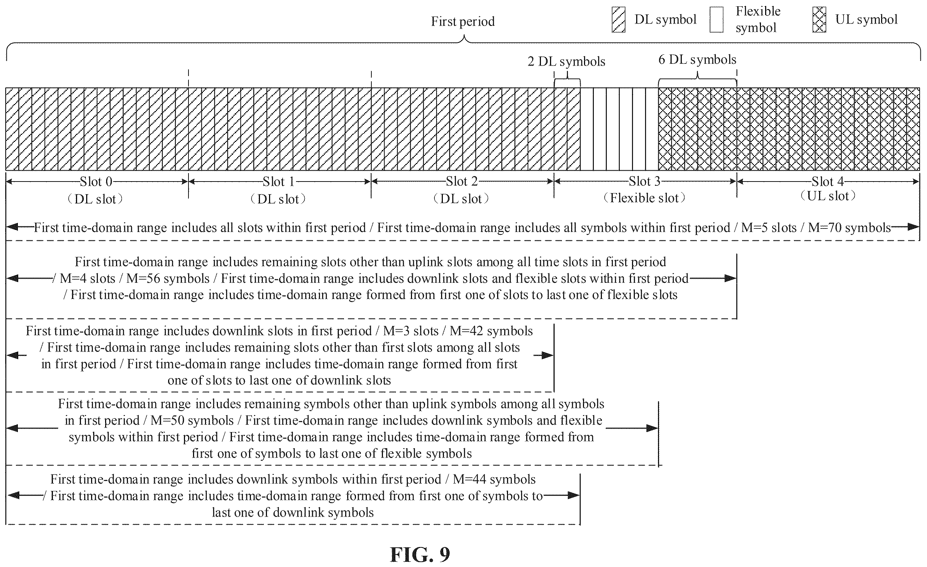

For example, taking the first subcarrier spacing of 15 kHz, the first period of 5 ms, and the number of symbols within one slot being 14 as an example, the first time-domain ranges for the different determination methods described above are shown in FIG. 9. Therefore, the embodiments of the disclosure support providing a plurality of optional manners for indicating or determining the first time-domain range, have excellent flexibility in indicating or determining the first time-domain range, and support providing accurate, appropriate, and flexible first time-domain ranges for various communication scenarios, so as to be suitable for different uplink transmission capacity requirements and time delay requirements.

In some embodiments, the first time-domain range includes at least two time-domain sub-ranges. One of the at least two time-domain sub-ranges is determined according to at least one of: a first TDD uplink-downlink transmission period; a second TDD uplink-downlink transmission period; the first subcarrier spacing; uplink slots within the first TDD uplink-downlink transmission period; downlink slots within the first TDD uplink-downlink transmission period; flexible slots within the first TDD uplink-downlink transmission period; uplink symbols within the first TDD uplink-downlink transmission period; downlink symbols within the first TDD uplink-downlink transmission period; flexible symbols within the first TDD uplink-downlink transmission period; uplink slots within the second TDD uplink-downlink transmission period; downlink slots within the second TDD uplink-downlink transmission period; flexible slots within the second TDD uplink-downlink transmission period; uplink symbols within the second TDD uplink-downlink transmission period; downlink symbols within the second TDD uplink-downlink transmission period; or flexible symbols within the second TDD uplink-downlink transmission period.

**Considering that the TDD periods corresponding to the at least two time-domain sub-ranges are the same or different, the following two cases are introduced as follows.**

**In case 1, the first time-domain range includes a first time-domain sub-range and a second time-domain sub-range.**

In some embodiments, the first period is a sum of the first TDD uplink-downlink transmission period and the second TDD uplink-downlink transmission period, that is, the first period is equal to the first TDD uplink-downlink transmission period and the second TDD uplink-downlink transmission period.

It is assumed that the first period is the sum of the first TDD uplink-downlink transmission period and the second TDD uplink-downlink transmission period. Referring to the related content of the first period described above, the pattern of the first TDD uplink-downlink transmission period is the first pattern, and the pattern of the second TDD uplink-downlink transmission period is the second pattern. In this case, the first time-domain range includes a first time-domain sub-range and a second time-domain sub-range. Exemplarily, the first time-domain sub-range is denoted as $M_1$ and the second time-domain sub-range is denoted as $M_2$, then the first time-domain range $M = M_1 + M_2$.

In some embodiments, the first time-domain sub-range includes one of: all slots within the first TDD uplink-downlink transmission period; remaining slots other than uplink slots among all slots within the first TDD uplink-downlink transmission period; remaining slots other than first slots among all slots within the first TDD uplink-downlink transmission period, the first slots being slots including uplink symbols; downlink slots within the first TDD uplink-downlink transmission period; downlink slots and flexible slots within the first TDD uplink-downlink transmission period; all symbols within the first TDD uplink-downlink transmission period; remaining symbols other than uplink symbols among all symbols within the first TDD uplink-downlink transmission period; downlink symbols within the first TDD uplink-downlink transmission period; downlink symbols and flexible symbols within the first TDD uplink-downlink transmission period; a time-domain range formed from a first one of slots to a last one of downlink slots within the first TDD uplink-downlink transmission period; a time-domain range formed from the first one of slots to a last one of flexible slots within the first TDD uplink-downlink transmission period; a time-domain range formed from a first one of symbols to a last one of downlink symbols within the first TDD uplink-downlink transmission period; a time-domain range formed from the first one of symbols to a last one of flexible symbols within the first TDD uplink-downlink transmission period; a time-domain range formed from the first one of slots to the last one of downlink symbols within the first TDD uplink-downlink transmission period; a time-domain range formed from the first one of slots to the last one of flexible symbols within the first TDD uplink-downlink transmission period; a time-domain range formed from the first one of symbols to the last one of downlink slots within the first TDD uplink-downlink transmission period; or a time-domain range formed from the first one of symbols to the last one of flexible slots within the first TDD uplink-downlink transmission period.

For the advantages and disadvantages of the above-described various first time-domain sub-ranges, reference can be made to contents related to the first time-domain range described above, and will not be repeated here.

In some embodiments, the first time-domain sub-range is determined according to the first TDD uplink-downlink transmission period and/or the first subcarrier spacing. Exemplarily, the first TDD uplink-downlink transmission period is denoted as $T_1$, the first subcarrier spacing is denoted as $\mu$, and the first time-domain sub-range is denoted as $M_1$.

In some embodiments, $M_1 = T_1 * 2^\mu$ slots, which is equivalent to the case where "the first time-domain sub-range includes all slots within the first TDD uplink-downlink transmission period" described above.

In some embodiments, $M_1 = T_1 * 2^\mu - J_1$ slots, where $J_1$ is the number of uplink slots within the first TDD uplink-downlink transmission period. This is equivalent to the case where "the first time-domain sub-range includes remaining slots other than uplink slots among all slots within the first TDD uplink-downlink transmission period" described above.

In some embodiments, $M_1 = T_1 * 2^\mu - J_2$ slots, where $J_2$ is the number of first slots within the first TDD uplink-downlink transmission period. This is equivalent to the case where "the first time-domain sub-range includes remaining slots other than first slots among all slots within the first TDD uplink-downlink transmission period" described above. The first slots are slots including uplink symbols.

In some embodiments, $M_1 = J_3$ slots, where $J_3$ is the number of downlink slots within the first TDD uplink-downlink transmission period, that is, the number of downlink slots among $T_1 * 2^\mu$ slots. This is equivalent to the case where "the first time-domain sub-range includes downlink slots within the first TDD uplink-downlink transmission period" described above.

In some embodiments, $M_1 = J_3 + J_4$ slots. Herein, $J_3$ is the number of downlink slots within the first TDD uplink-downlink transmission period, that is, the number of downlink slots among $T_1 * 2^\mu$ slots. $J_4$ is the number of flexible slots within the first TDD uplink-downlink transmission period, that is, the number of flexible slots among $T_1 * 2^\mu$ slots. This is equivalent to the case where "the first time-domain sub-range includes downlink slots and flexible slots within the first TDD uplink-downlink transmission period" described above.

In some embodiments, $M_1 = T_1 * 2^\mu * N_{symbol}^{slot}$ symbols. Herein, $N_{symbol}^{slot}$ refers to the number of symbols within a slot, exemplarily, 14 symbols within a slot, or 7 symbols within a slot, etc. There is no limit on the value of $N_{symbol}^{slot}$ in the disclosure, and adjustment of the value according to the actual situation is supported. This is equivalent to the case where "the first time-domain sub-range includes all symbols within the first TDD uplink-downlink transmission period" described above.

In some embodiments, $M_1 = T_1 * 2^\mu * N_{symbol}^{slot} - R_1$ symbols. Herein, $R_1$ is the number of uplink symbols within the first TDD uplink-downlink transmission period. This is equivalent to the case where "the first time-domain range includes remaining symbols other than uplink symbols among all symbols within the first TDD uplink-downlink transmission period" described above.

In some embodiments, $M_1 = R_2$ symbols. Herein, $R_2$ is the number of downlink symbols within the first TDD uplink-downlink transmission period, that is, the number of downlink symbols among $T_1 * 2^\mu * N_{symbol}^{slot}$ symbols. This is equivalent to the case where "the first time-domain sub-range includes downlink symbols within the first TDD uplink-downlink transmission period" described above.

In some embodiments, $M_1 = R_2 + R_3$ symbols. Herein, $R_2$ is the number of downlink symbols within the first TDD uplink-downlink transmission period, that is, the number of downlink symbols among $T_1 * 2^\mu * N_{symbol}^{slot}$ symbols. $R_3$ is the number of flexible symbols within the first TDD uplink-downlink transmission period, that is, the number of flexible symbols among $T_1 * 2^\mu * N_{symbol}^{slot}$ symbols. This is equivalent to the case where "the first time-domain sub-range includes downlink symbols and flexible symbols within the first TDD uplink-downlink transmission period" described above.

In some embodiments, the second time-domain sub-range includes one of: all slots within the second TDD uplink-downlink transmission period; remaining slots other than uplink slots among all slots within the second TDD uplink-downlink transmission period; remaining slots other than first slots among all slots within the second TDD uplink-downlink transmission period, the first slots being slots including uplink symbols; downlink slots within the second TDD uplink-downlink transmission period; downlink slots and flexible slots within the second TDD uplink-downlink transmission period; all symbols within the second TDD uplink-downlink transmission period; remaining symbols other than uplink symbols among all symbols within the second TDD uplink-downlink transmission period; downlink symbols within the second TDD uplink-downlink transmission period; downlink symbols and flexible symbols within the second TDD uplink-downlink transmission period; a time-domain range formed from a first one of slots to a last one of downlink slots within the second TDD uplink-downlink transmission period; a time-domain range formed from the first one of slots to a last one of flexible slots within the second TDD uplink-downlink transmission period; a time-domain range formed from a first one of symbols to a last one of downlink symbols within the second TDD uplink-downlink transmission period; a time-domain range formed from the first one of symbols to a last one of flexible symbols within the second TDD uplink-downlink transmission period; a time-domain range formed from the first one of slots to the last one of downlink symbols within the second TDD uplink-downlink transmission period; a time-domain range formed from the first one of slots to the last one of flexible symbols within the second TDD uplink-downlink transmission period; a time-domain range formed from the first one of symbols to the last one of downlink slots within the second TDD uplink-downlink transmission period; or a time-domain range formed from the first one of symbols to the last one of flexible slots within the second TDD uplink-downlink transmission period.

For the advantages and disadvantages of the above-described various second time-domain sub-ranges, reference can be made to contents related to the first time-domain range described above, and will not be repeated here.

In some embodiments, the second time-domain sub-range is determined according to the second TDD uplink-downlink transmission period and/or the first subcarrier spacing. Exemplarily, the second TDD uplink-downlink transmission period is denoted as $T_2$, the first subcarrier spacing is denoted as $\mu$, and the second time-domain sub-range is denoted as $M_2$.

In some embodiments, $M_2 = T_2 * 2^\mu$ slots, which is equivalent to the case where "the second time-domain sub-range includes all slots within the second TDD uplink-downlink transmission period" described above.

In some embodiments, $M_2 = T_2 * 2^\mu - F_1$ slots, where $F_1$ is the number of uplink slots within the second TDD uplink-downlink transmission period. This is equivalent to the case where "the second time-domain sub-range includes remaining slots other than uplink slots among all slots within the second TDD uplink-downlink transmission period" described above.

In some embodiments, $M_2 = T_2 * 2^\mu - F_2$ slots, where $F_2$ is the number of first slots within the second TDD uplink-downlink transmission period. This is equivalent to the case where "the second time-domain sub-range includes remaining slots other than first slots among all slots within the second TDD uplink-downlink transmission period" described above. The first slots are slots including uplink symbols.

In some embodiments, $M_2 = F_3$ slots, where $F_3$ is the number of downlink slots within the second TDD uplink-downlink transmission period, that is, the number of downlink slots among $T_2 * 2^\mu$ slots. This is equivalent to the case where "the second time-domain sub-range includes downlink slots within the second TDD uplink-downlink transmission period" described above.

In some embodiments, $M_2 = F_3 + F_4$ slots. Herein, $F_3$ is the number of downlink slots within the second TDD uplink-downlink transmission period, that is, the number of downlink slots among $T_2 * 2^\mu$ slots. $F_4$ is the number of flexible slots within the second TDD uplink-downlink transmission period, that is, the number of flexible slots among $T_2 * 2^\mu$ slots. This is equivalent to the case where "the second time-domain sub-range includes downlink slots and flexible slots within the second TDD uplink-downlink transmission period" described above.

In some embodiments, $M_2 = T_2 * 2^\mu * N_{symbol}^{slot}$ symbols. Herein, $N_{symbol}^{slot}$ refers to the number of symbols within a slot, exemplarily, 14 symbols within a slot, or 7 symbols within a slot, etc. There is no limit on the value of $N_{symbol}^{slot}$ in the disclosure, and adjustment of the value according to the actual situation is supported. This is equivalent to the case where "the second time-domain sub-range includes all symbols within the second TDD uplink-downlink transmission period" described above.

In some embodiments, $M_2 = T_2 * 2^\mu * N_{symbol}^{slot} - H_1$ symbols. Herein, $H_1$ is the number of uplink symbols within the second TDD uplink-downlink transmission period. This is equivalent to the case where "the second time-domain range includes remaining symbols other than uplink symbols among all symbols within the second TDD uplink-downlink transmission period" described above.

In some embodiments, $M_2 = H_2$ symbols. Herein, $H_2$ is the number of downlink symbols within the second TDD uplink-downlink transmission period, that is, the number of downlink symbols among $T_2 * 2^\mu * N_{symbol}^{slot}$ symbols. This is equivalent to the case where "the second time-domain sub-range includes downlink symbols within the second TDD uplink-downlink transmission period" described above.

In some embodiments, $M_2 = H_2 + H_3$ symbols. Herein, $H_2$ is the number of downlink symbols within the second TDD uplink-downlink transmission period, that is, the number of downlink symbols among $T_2 * 2^\mu * N_{symbol}^{slot}$ symbols. $H_3$ is the number of flexible symbols within the second TDD uplink-downlink transmission period, that is, the number of flexible symbols among $T_2 * 2^\mu * N_{symbol}^{slot}$ symbols. This is equivalent to the case where "the second time-domain sub-range includes downlink symbols and flexible symbols within the second TDD uplink-downlink transmission period" described above.

In some embodiments, time-domain positions of the first uplink subband within the first time-domain sub-range in the first TDD uplink-downlink transmission period are the same as or different from time-domain positions of the first uplink subband within the second time-domain sub-range in the second TDD uplink-downlink transmission period.

In some embodiments, the determination manner of the time-domain positions of the first uplink subband within the first time-domain sub-range in the first TDD uplink-downlink transmission period is the same as or different from the determination manner of the time-domain positions of the first uplink subband within the second time-domain sub-range in the second TDD uplink-downlink transmission period.

In some embodiments, the number of slots of the first uplink subband within the first time-domain sub-range in the first TDD uplink-downlink transmission period is the same as or different from the number of slots of the first uplink subband within the second time-domain sub-range in the second TDD uplink-downlink transmission period.

In some embodiments, the number of symbols of the first uplink subband within the first time-domain sub-range in the first TDD uplink-downlink transmission period are the same as or different from the number of symbols of the first uplink subband within the second time-domain sub-range in the second TDD uplink-downlink transmission period.

The above-described various manners of indicating or determining the first time-domain sub-range and the second time-domain sub-range respectively are flexible in design, and can make the first time-domain range more easily adapt to different uplink transmission capacity and delay requirements.

In some embodiments, the first time-domain range includes a time-domain range formed from a first one of slots within $T_1$ to a last one of downlink slots within $T_2$.

In some embodiments, the first time-domain range includes a time-domain range formed from the first one of slots within $T_1$ to a last one of flexible slots within $T_2$.

In some embodiments, the first time-domain range includes a time-domain range formed from a first one of symbols within $T_1$ to a last one of downlink symbols within $T_2$.

In some embodiments, the first time-domain range includes a time-domain range formed from a first one of symbols within $T_1$ to a last one of flexible symbols within $T_2$.

The above four manners of indicating or determining the first time-domain range "across the TDD period", that is, manners of uniformly indicating or determining ranges within the first TDD uplink-downlink transmission period and the second TDD uplink-downlink transmission period without distinguishing the first time-domain sub-range and the second time-domain sub-range, are simple to implement and require a relatively small number of bits.

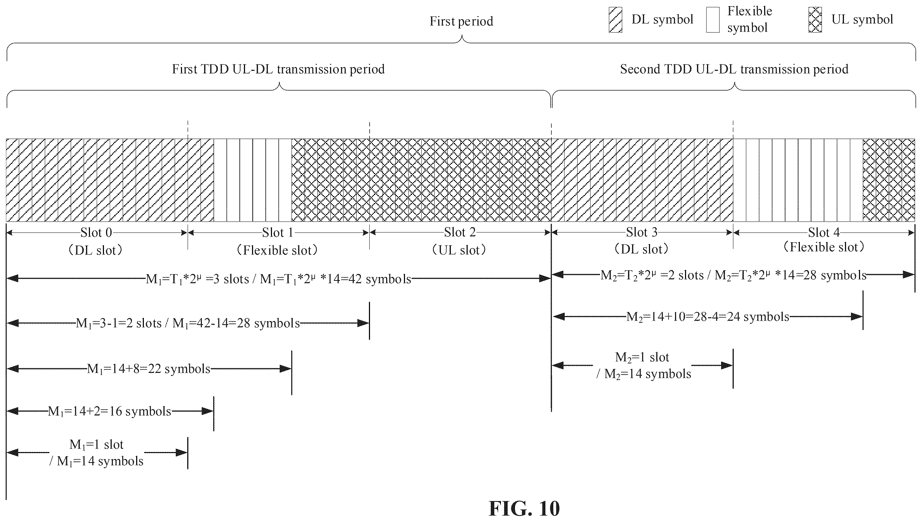

Exemplarily, taking the first subcarrier spacing of 15 kHz, the first period of 5 ms, and the number of symbols within one slot being 14 as an example, the first time-domain sub-range and the second time-domain sub-range under the above different determination manners are as shown in FIG. 10. The time-domain positions of first uplink subband within the first time-domain range in the first period include: the time-domain positions of the first uplink subband within the first time-domain sub-range in the first TDD uplink-downlink transmission period, and the time-domain positions of the first uplink subband in the second TDD uplink-downlink transmission period. The first TDD uplink-downlink transmission period corresponds to the first pattern, and the second TDD uplink-downlink transmission period corresponds to the second pattern.

Therefore, the embodiments of the disclosure support providing a plurality of optional manners for indicating or determining the first time-domain range in a case where the first period is a TDD dual-period, have excellent flexibility in indicating or determining the first time-domain range, and support providing accurate, easily-implemented, and flexible first time-domain ranges for various communication scenarios, so as to be suitable for different uplink transmission capacity requirements and time delay requirements.

**In case 2, the first time-domain range includes an integer multiple of time-doamin sub-ranges.**

In some embodiments, the first period is X times the first TDD uplink-downlink transmission period, or the first period is Y times the sum of the first TDD uplink-downlink transmission period and the second TDD uplink-downlink transmission period.

Taking the first period being X times the first TDD uplink-downlink transmission period as an example, the first time-domain range can be divided into X first time-domain sub-ranges, which are respectively expressed as $M_{1,x}, ...M_{i,x}, ...M_{x,x}$, where i is an integer greater than or equal to 1 and less than or equal to X.

$M_{1,x}$ represents a 1st first time-domain sub-range in a first period, $M_{i,x}$ represents an i-th first time-domain sub-range in the first period, and $M_{x,x}$ represents an X-th first time-domain sub-range in the first period.

In some embodiments, the i-th first time-domain sub-range includes one of: all slots within an i-th first TDD uplink-downlink transmission period; remaining slots other than uplink slots among all slots within the i-th first TDD uplink-downlink transmission period; remaining slots other than first slots among all slots within the i-th first TDD uplink-downlink transmission period, the first slots being slots including uplink symbols; downlink slots within the i-th first TDD uplink-downlink transmission period; downlink slots and flexible slots within the i-th first TDD uplink-downlink transmission period; all symbols within the i-th first TDD uplink-downlink transmission period; remaining symbols other than uplink symbols among all symbols within the i-th first TDD uplink-downlink transmission period; downlink symbols within the i-th first TDD uplink-downlink transmission period; downlink symbols and flexible symbols within the i-th first TDD uplink-downlink transmission period; a time-domain range formed from a first one of slots to a last one of downlink slots within the i-th first TDD uplink-downlink transmission period; a time-domain range formed from the first one of slots to a last one of flexible slots within the i-th first TDD uplink-downlink transmission period; a time-domain range formed from a first one of symbols to a last one of downlink symbols within the i-th first TDD uplink-downlink transmission period; and a time-domain range formed from the first one of symbols to a last one of flexible symbols within the i-th first TDD uplink-downlink transmission period.

In some embodiments, the i-th first time-domain sub-range is determined according to the i-th first TDD uplink-downlink transmission period and/or the first subcarrier spacing. For related contents, reference can be made to the case 1, which will not be repeated here.

The manner of indicating or determining the first time-domain sub-ranges as described above supports flexible design of each of the first time-domain sub-ranges, so that the first time-domain range can be more easily adapted to different uplink transmission capacity and delay requirements.

In some embodiments, the first TDD uplink-downlink transmission period is expressed as P1, and the first period is X times P1.

In some embodiments, the first time-domain range includes a time-domain range formed from a first one of slots within a first one of X P1s to a last one of downlink slots within a last one of the X P1s.

In some embodiments, the first time-domain range includes a time-domain range formed from the first one of slots within the first one of the X P1s to a last one of flexible slots within the last one of the X P1s.

In some embodiments, the first time-domain range includes a time-domain range formed from a first one of symbols within the first one of the X P1s to a last one of downlink symbols within the last one of the X P1s.

In some embodiments, the first time-domain range includes a time-domain range formed from the first one of symbols within the first one of X P1s to a last one of flexible symbols within the last one of the X P1s.

In some embodiments, the first time-domain range includes a time-domain range formed from the first one of slots within the first one of X P1s to a last one of downlink slots within an i-th one of the X P1s.

In some embodiments, the first time-domain range includes a time-domain range formed from the first one of slots within the first one of the X P1s to a last one of flexible slots within the i-th one of the X P1s.

In some embodiments, the first time-domain range includes a time-domain range formed from a first one of symbols within the first one of the X P1s to a last one of downlink symbols within the i-th one of the X P1s.

In some embodiments, the first time-domain range includes a time-domain range formed from the first one of symbols within the first one of X P1s to a last one of flexible symbols within the i-th one of the X P1s.

The manners of indicating or determining the first time-domain range "across the TDD period", that is, the manners of uniformly indicating or determining ranges within multiple first TDD uplink-downlink transmission periods without distinguishing respective first time-domain sub-ranges, are simple to implement and require a relatively small number of bits.

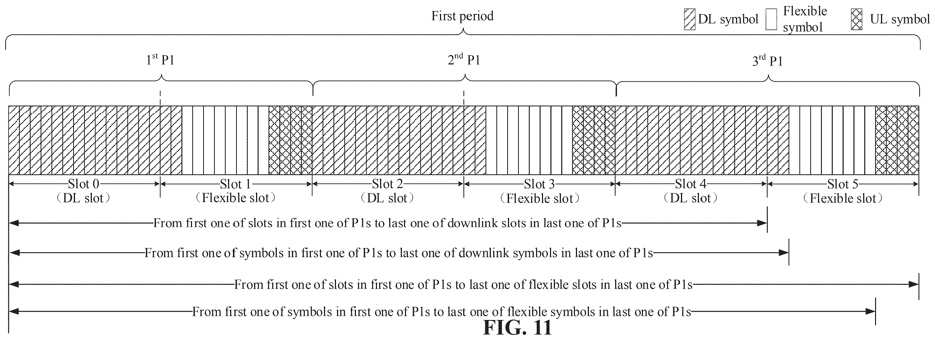

Exemplarily, when the first period is X times the first TDD uplink-downlink transmission period, the first time-domain ranges determined using the different manners are shown in FIG. 11. FIG. 11 illustrates an example where X is 3.

Therefore, the embodiments of the disclosure support providing a plurality of optional manners for indicating or determining the first time-domain range in a case where the first period is an integer multiple of the TDD period, have excellent flexibility in indicating or determining the first time-domain range, and support providing accurate, easily-implemented, and flexible first time-domain ranges for various communication scenarios, so as to be suitable for different uplink transmission capacity requirements and time delay requirements.

Taking the first period being Y times the sum of the first TDD uplink-downlink transmission period and the second TDD uplink-downlink transmission period as an example, the first time-domain range may be divided into Y time-domain sub-range groups. The Y time-domain sub-range groups are respectively expressed as $M_{1,Y}$, ...$M_{i,Y}$,...$M_{Y,Y}$, where i is an integer greater than or equal to 1 and less than or equal to Y.

$M_{1,Y}$ represents a first one of time-domain sub-range groups in a first period, $M_{i,Y}$ represents an i-th one of time-domain sub-range groups in the first period, and $M_{Y,Y}$ represents a Y-th one of time-domain sub-range groups in the first period.

In some embodiments, the first TDD uplink-downlink transmission period is denoted as P1, the second TDD uplink-downlink transmission period is denoted as P2, and the first period is Y times (P1+P2). Each time-domain sub-range group includes one first time-domain sub-range and one second time-domain sub-range, then the first time-domain range $M = \sum_{i=1}^{Y}(M_{1,i} + M_{2,i})$. Herein, $M_{1,i}$ represents a first time-domain sub-range in an i-th time-domain sub-range group, and $M_{2,i}$ represents a second time-domain sub-range in the i-th time-domain sub-range group.

For determining each time-domain sub-range group, the first time-domain sub-range and the second time-domain sub-range can be determined through the first TDD uplink-downlink transmission period and the second TDD uplink-downlink transmission period, respectively, with reference to the contents in the section "In case 1, the first time-domain range includes a first time-domain sub-range and a second time-domain sub-range".

The determination of the i-th sub-time-domain unit group is similar to the determination of the "i-th first time-domain sub-range" described above, and will not be repeatedly described here.

Therefore, the embodiment of the disclosure supports flexible design of the first time-domain sub-range and the second time-domain sub-range respectively when the first period is Y times (P1+P2), and also supports flexible design of Y time-domain sub-range groups respectively, so that the first time-domain range is more easily adapted to delay requirements, capacity requirements, reliability requirements and the like in different communication scenarios.

In some embodiments, the first time-domain range includes a time-domain range formed from a first one of slots within a first one of P1s to a last one of downlink slots within a last one of P2s within Y (P1 + P2)s.

In some embodiments, the first time-domain range includes a time-domain range formed from the first one of slots within the first one of the P1s to a last one of flexible slots within the last one of the P2s within Y (P1 + P2)s.

In some embodiments, the first time-domain range includes a time-domain range formed from a first one of symbols within the first one of the P1s to a last one of downlink symbols within the last one of the P2s within Y (P1 + P2)s.

In some embodiments, the first time-domain range includes a time-domain range formed from the first one of symbols within the first one of P1s to a last one of flexible symbols within the last one of the P2s within Y (P1 + P2)s.

In some embodiments, the first time-domain range includes a time-domain range formed from the first one of slots within the first one of P1s to a last one of downlink slots within an i-th one of P2s within Y (P1 + P2)s.

In some embodiments, the first time-domain range includes a time-domain range formed from the first one of slots within the first one of the P1s to a last one of flexible slots within the i-th one of the P2s within Y (P1 + P2)s.

In some embodiments, the first time-domain range includes a time-domain range formed from the first one of symbols within the first one of the P1s to a last one of downlink symbols within the i-th one of the P2s within Y (P1 + P2)s.

In some embodiments, the first time-domain range includes a time-domain range formed from the first one of symbols within the first one of P1s to a last one of flexible symbols within the i-th one of the P2s within Y (P1 + P2)s.

Therefore, the embodiments of the disclosure support indicating or determining the first time-domain range "across TDD periods" when the first period is Y times (P1+P2), and adopt the manner of uniformly indicating or determining ranges within a plurality of first TDD uplink-downlink transmission periods and a plurality of second TDD uplink-downlink transmission periods, which is simple to implement and requires a relatively small number of bits.

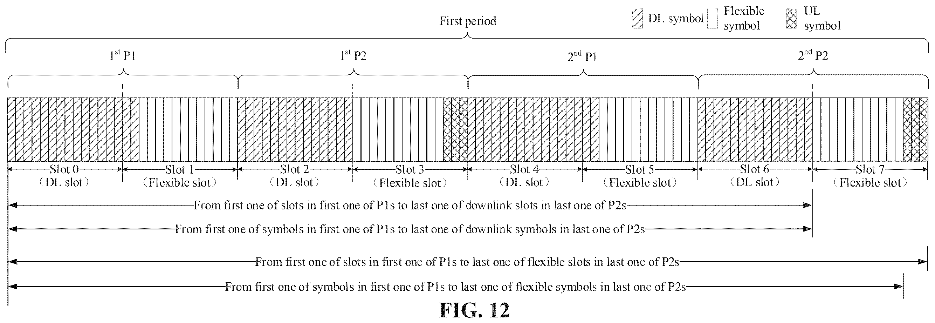

Exemplarily, when the first period is Y times "the first TDD uplink-downlink transmission period and the second TDD uplink-downlink transmission period", the first time-domain ranges determined using the different manners are shown in FIG. 12. FIG. 12 illustrates an example where Y is 2.

Therefore, the embodiments of the disclosure support providing a plurality of optional manners for indicating or determining the first time-domain range in a case where the first period is an integer multiple of the TDD dual-period, have excellent flexibility in indicating or determining the first time-domain range, and support providing accurate, easily-implemented, and flexible first time-domain ranges for various communication scenarios, so as to be suitable for different uplink transmission capacity requirements and time delay requirements.

5. **Regarding the first time-domain position information**

In some embodiments, the first configuration information is used to determine the time-domain positions of the first uplink subband within the first time-domain range in the first period.

In some embodiments, the time-domain positions of the first uplink subband are determined according to the first time-domain position information.

In some embodiments, the first time-domain position information includes at least one of: a first start indication value for indicating a start reference time unit group of the first uplink subband within the first time-domain range, denoted as $S_1$; a first length indication value for indicating a number of reference time unit groups of the first uplink subband within the first time-domain range, denoted as $L_1$; or a first end indication value for indicating an end reference time unit group of the first uplink subband within the first time-domain range, denoted as $E_1$.

In some embodiments, the first time-domain position information includes $S_1$ and $L_1$, and the time-domain positions of the first uplink subband within the first time-domain range in the first period are determined according to $S_1$ and $L_1$.

In some embodiments, $S_1$ is agreed by a communication protocol, and $L_1$ is configured by the first configuration information. Exemplarily, it is agreed in the communication protocol that $S_1 = 0$, and $L_1$ is configured by the first configuration information configuration, then the first time-domain range includes $L_1$ reference time unit groups counted chronologically forward from the agreed start reference time unit group.

In some embodiments, $S_1$ is configured by the first configuration information, and $L_1$ is agreed by a communication protocol. Exemplarily, $L_1$ is agreed by the communication protocol, and $S_1$ is configured by the first configuration information configuration, then the first time-domain range includes $L_1$ reference time unit groups counted chronologically forward from the configured start reference time unit group.

In some embodiments, both $S_1$ and $L_1$ are configured by the first configuration information.

In some embodiments, the first time-domain position information includes $S_1$ and $E_1$, and the time-domain positions of the first uplink subband within the first time-domain range in the first period are determined according to $S_1$ and $E_1$.

In some embodiments, $S_1$ is agreed by a communication protocol, and $E_1$ is configured by the first configuration information. Exemplarily, it is agreed in the communication protocol that $S_1 = 0$, and $E_1$ is configured by the first configuration information configuration, then the first time-domain range includes from the agreed start reference time unit group to the configured end reference time unit group.

In some embodiments, $S_1$ is configured by the first configuration information, and $E_1$ is agreed by a communication protocol. Exemplarily, $E_1$ is agreed by the communication protocol, and $S_1$ is configured by the first configuration information configuration, then the first time-domain range includes from the configured start reference time unit group to the agreed end reference time unit group.

In some embodiments, both $S_1$ and $E_1$ are configured by the first configuration information.

In some embodiments, the first time-domain position information includes $L_1$ and $E_1$, and the time-domain positions of the first uplink subband within the first time-domain range in the first period are determined according to $L_1$ and $E_1$.

In some embodiments, $E_1$ is agreed by a communication protocol, and $L_1$ is configured by the first configuration information. Exemplarily, it is agreed in the communication protocol that $E_1$ is the last one of reference time unit groups, the last one of downlink slots or the last one of downlink symbols, and $L_1$ is configured by the first configuration information, then the first time-domain range includes $L_1$ reference time unit groups counted chronologically backward from the configured end reference time unit group.

In some embodiments, $E_1$ is configured by the first configuration information, and $L_1$ is agreed by a communication protocol. Exemplarily, $L_1$ is agreed by the communication protocol, and $E_1$ is configured by the first configuration information configuration, then the first time-domain range includes $L_1$ reference time unit groups counted chronologically backward from the configured end reference time unit group.

In some embodiments, both $E_1$ and $L_1$ are configured by the first configuration information.

Therefore, in the manner of determining the time-domain position according to one or more of the start indication value, the length indication value and the end indication value, $L_1$, $S_1$ and $E_1$ may be indicated by the first configuration information, thereby instantly and flexibly configuring suitable time-domain positions of the first uplink subband for the UE. Furthermore, $L_1$, $S_1$ and $E_1$ can also be agreed by a communication protocol, thereby reducing the number of bits required for the first configuration information to save transmission resources.

In addition, the manner of determining the first time-domain range according to one or more of the start indication value, the length indication value and the end indication value is applicable to a case where the first period is a first TDD uplink-downlink transmission period, also applicable to a case where the first period is a sum of the first TDD uplink-downlink transmission period and the second TDD uplink-downlink transmission period, also applicable to a case where the first period is an integer multiple of the first TDD uplink-downlink transmission period, and further applicable to a case where the first period is an integer multiple of the sum of the first TDD uplink-downlink transmission period and the second TDD uplink-downlink transmission period. That is, when determining the first time-domain range, various parameters required for determining the first time-domain range may be agreed or configured by disregarding whether the first period can be further divided into multiple sub-periods and instead treating the first period as a whole.

In some embodiments, the first time-domain position information is implemented as a Start and Length Indicator Value (SLIV). The SLIV manner is a method in which the start position and the length of the time-domain positions are represented by one coded value, that is, a method in which the start indication value and the length indication value are jointly coded to represent the time-domain positions.

In some embodiments, a first SLIV is obtained by encoding the first start indication value and the first length indication value. The time-domain positions of the first uplink subband within the first time-domain range in the first period may be determined according to the first SLIV.

In some embodiments, the first SLIV is obtained according to encoding rules as follows.

If $(L_1 - 1) \leq N_1/2$, the first SLIV $= N_1 * (L_1 - 1) + S_1$.

If $(L_1 - 1) > N_1/2$, the first SLIV $= N_1 * (N_1 = L_1 + 1) + (N_1 - 1 - S_1)$.

Herein, $N_1$ represents a total number of reference time unit groups in the first time-domain range, and is determined according to the number M' of time-domain units in the first time-domain range and the number G' of time-domain units in the reference time unit group.

In some embodiments, $N_1 = \left\lceil M' + \frac{M' \bmod G'}{G'} \right\rceil$, where "⌈ ⌉" represents rounding up.

In some embodiments, $N_1 = \left\lceil \frac{M'}{G'} \right\rceil$, where "⌈ ⌉" represents rounding up.

In some embodiments, $0 < L_1 \leq N_1 - S_1$.

In some embodiments, the reference time unit group G includes one slot or one symbol, then $N_1 = M'$.

Exemplarily, in the first period as shown in FIG. 9, it is assumed that the number of time-domain units in the first time-domain range is $M' = T * 2^\mu * N_{symbol}^{slot} - Q_1 = 50$ symbol.

It is assumed that a reference time unit group includes 1 symbol, i.e. G' = 1 symbol, then $N_1 = M' = 50$, that is, 50 reference time unit groups are included in the first time-domain range.

It is assumed that a reference time unit group includes 2 symbols, i.e. G' = 2 symbol, then $N_1 = M'/2 = 50/2 = 25$, that is, 25 reference time unit groups are included in the first time-domain range.

It is assumed that a reference time unit group includes 4 symbols, i.e. G' = 4 symbol, then $N_1 = \lceil M'/4 \rceil = \lceil 50/4 \rceil = 13$, that is, 13 reference time unit groups are included in the first time-domain range.

When the time-domain positions of the first uplink subband are determined according to the first SLIV, the number of required bits is small, thus transmission resources, are saved; and a several consecutive time-domain units can be determined from the first SLIV as the time-domain positions of the first uplink subband.

In addition, the manner of determining the first time-domain range according to the SLIV is applicable to a case where the first period is a first TDD uplink-downlink transmission period, also applicable to a case where the first period is a sum of the first TDD uplink-downlink transmission period and the second TDD uplink-downlink transmission period, also applicable to a case where the first period is an integer multiple of the first TDD uplink-downlink transmission period, and further applicable to a case where the first period is an integer multiple of the sum of the first TDD uplink-downlink transmission period and the second TDD uplink-downlink transmission period. That is, when determining the first time-domain range, various parameters required for determining the first time-domain range may be agreed or configured by disregarding whether the first period can be further divided into multiple sub-periods and instead treating the first period as a whole.

In some embodiments, considering that the first period is the sum of the first TDD uplink-downlink transmission period and the second TDD uplink-downlink transmission period, the first time-domain range includes a first time-domain sub-range and a second time-domain sub-range. In this case, the time-domain positions of the first uplink subband within the first time-domain sub-range and within the second time-domain sub-range can be separately determined, thus the time-domain positions of the first uplink subband can be designed in a more flexible manner, so that they are easier to adapt to delay requirements, capacity requirements, reliability requirements, and the like in different communication scenarios.

In some embodiments, the first time-domain position information includes at least one of: a first start indication sub-value for indicating a start reference time unit group of the first uplink subband within the first time-domain sub-range, denoted as $S_2$; a first length indication sub-value for indicating a number of reference time unit groups of the first uplink subband within the first time-domain sub-range, denoted as $L_2$; a first end indication sub-value for indicating an end reference time unit group of the first uplink subband within the first time-domain sub-range, denoted as $E_2$; a second start indication sub-value for indicating a start reference time unit group of the first uplink subband within the second time-domain sub-range, denoted as $S_3$; a second length indication sub-value for indicating a number of reference time unit groups of the first uplink subband within the second time-domain sub-range, denoted as $L_3$; or a second end indication sub-value for indicating an end reference time unit group of the first uplink subband within the second time-domain sub-range,

denoted as $E_3$.

In some embodiments, the time-domain positions of the first uplink subband within the first time-domain sub-range are determined according to one or more of: $S_2$, $L_2$ and $E_2$.

Similar to the first time-domain range, the time-domain positions of the first uplink subband within the first time-domain sub-range may also be determined according to $S_2$ and $L_2$, or according to $L_2$ and $E_2$, or according to $S_2$ and $E_2$.

Similar to $S_1$, $S_2$ is agreed by a communication protocol, or configured by the first configuration information. Similar to $L_1$, $L_2$ is agreed by a communication protocol, or configured by the first configuration information. Similar to $E_1$, $E_2$ is agreed by a communication protocol, or configured by the first configuration information.

In some embodiments, a first sub-SLIV is obtained by encoding $S_2$ and $L_2$. The time-domain positions of the first uplink subband within the first time-domain sub-range are determined according to the first sub-SLIV.

In some embodiments, the first sub-SLIV is obtained according to encoding rules as follows.

If $(L_2 - 1) \leq N_2/2$, the first sub-SLIV = $N_2 * (L_2 - 1) + S_2$
If $(L_2 - 1) > N_2/2$, the first sub-SLIV = $N_2 * (N_2 - L_2 + 1) + (N_2 - 1 - S_2)$.

Herein, $N_2$ represents a total number of reference time unit groups in the first time-domain sub-range, and is determined according to the number $M_1'$ of time-domain units in the first time-domain sub-range and the number $G'$ of time-domain units in the reference time unit group.

In some embodiments, $N_2 = \left\lceil M_1' + \frac{M_1' \bmod G'}{G'} \right\rceil$, where "⌈ ⌉" represents rounding up.

In some embodiments, $N_2 = \left\lceil \frac{M_1'}{G'} \right\rceil$, where "⌈ ⌉" represents rounding up.

In some embodiments, $0 < L_2 \leq N_2 - S_2$.

Exemplarily, it is agreed by the communication protocol that $S_2$ is 1, $M_1' = 50$ and $G' = 2$, then $N_2 = \frac{50}{2} = 25$. $L_2 = 11$, then $(L_2 - 1) \leq N_2/2$. Then, the first sub-SLIV = $N_2 * (L_2 - 1) + S_2 = 25 * 10 + 1 = 251$.

Exemplarily, the first configuration information configures that $S_2$ is 3, $M_1' = 50$ and $G' = 6$, then $N_2 = \left\lceil \frac{50}{6} \right\rceil = 9$. $L_2 = 6$, then $(L_2 - 1) > N_2/2$. Then, the first sub-SLIV = $N_2 * (N_2 - L_2 + 1) + (N_2 - 1 - S_2) = 9 * (9 - 6 + 1) + (9 - 1 - 3) = 41$.

In some embodiments, the time-domain positions of the first uplink subband within the second time-domain sub-range are determined according to one or more of: $S_3$, $L_3$ and $E_3$.

Similar to the first time-domain range and the first time-domain sub-range, the time-domain positions of the first uplink subband within the second time-domain sub-range may also be determined according to $S_3$ and $L_3$, or according to $L_3$ and $E_3$, or according to $S_3$ and $E_3$.

Similar to $S_1$, $S_3$ is agreed by a communication protocol, or configured by the first configuration information. Similar to $L_1$, $L_3$ is agreed by a communication protocol, or configured by the first configuration information. Similar to $E_1$, $E_3$ is agreed by a communication protocol, or configured by the first configuration information.

In some embodiments, a second sub-SLIV is obtained by encoding $S_3$ and $L_3$. The time-domain positions of the first uplink subband within the second time-domain sub-range are determined according to the second sub-SLIV.

In some embodiments, the second sub-SLIV is obtained according to encoding rules as follows.

If $(L_3 - 1) \leq N_3/2$, the second sub-SLIV = $N_3 * (L_3 - 1) + S_3$.
If $(L_3 - 1) > N_3/2$, the second sub-SLIV = $N_3 * (N_3 - L_3 + 1) + (N_3 - 1 - S_3)$.

Herein, $N_3$ represents a total number of reference time unit groups in the second time-domain sub-range, and is determined according to the number $M_2'$ of time-domain units in the second time-domain sub-range and the number $G'$ of time-domain units in the reference time unit group.

In some embodiments, $N_3 = \left\lceil M_2' + \frac{M_2' \bmod G'}{G'} \right\rceil$, where "⌈ ⌉" represents rounding up.

In some embodiments, $N_3 = \left\lceil \frac{M_2'}{G'} \right\rceil$, where "⌈ ⌉" represents rounding up.

In some embodiments, $0 < L_3 \leq N_3 - S_3$.

Exemplarily, it is agreed by the communication protocol that $S_3$ is 1, $M_2' = 60$ and $G' = 3$, then $N_3 = \frac{60}{3} = 20$. $L_3 = 11$, then $(L_3 - 1) \leq N_3/2$. Then, the second sub-SLIV = $N_3 * (L_3 - 1) + S_3 = 20 * 10 + 1 = 201$.

Exemplarily, the first configuration information configures that $S_3$ is 3, $M_2' = 60$ and $G' = 7$, then

$$N_3 = \left\lceil M_2 + \frac{M_2' \bmod G'}{G'} \right\rceil = \left\lceil 60 + \frac{60 \bmod 7}{7} \right\rceil = 61$$ . $L_3 = 6$, then $(L_3 - 1) \leq N_3/2$. Then, the second sub-SLIV = $N_3 * (L_3 - 1) + S_3 = 61 * 5 + 3 = 308$.

In some embodiments, the determination manner of the time-domain positions of the first uplink subband within the first time-domain sub-range is the same as or different from the determination manner of the time-domain positions of the first uplink subband within the second time-domain sub-range. Exemplarily, the time-domain positions of the first uplink subband within the first time-domain sub-range are determined through $L_2$ and $E_2$, and the time-domain positions of the first uplink subband within the second time-domain sub-range is determined through the second sub-SLIV. Exemplarily, the time-domain positions of the first uplink subband within the first time-domain sub-range are determined through $S_2$ and $L_2$; the time-domain positions of the first uplink subband within the second time-domain sub-range is determined through $S_3$ and $E_3$; and the like. All possibilities are not listed here, but it can be understood that the embodiments of the disclosure do not limit that the time-domain positions of the first uplink subband in different time-domain sub-ranges must be determined in the same manner.

In some embodiments, the first time-domain range includes X first time-domain sub-ranges, considering a case where the first period is X times the first TDD uplink-downlink transmission period. In this case, the time-domain positions of the first uplink subband within respective first time-domain sub-ranges can be separately determined, thus the time-domain positions of the first uplink subband can be designed in a more flexible manner, so that they are easier to adapt to delay requirements, capacity requirements, reliability requirements, and the like in different communication scenarios.

It is assumed that the first TDD uplink-downlink transmission period is expressed as P1, the first period includes X P1s, and the first time-domain range can be divided into X first time-domain sub-ranges, which are respectively expressed as $M_{1,x}$, ...$M_{i,x}$, ...$M_{x,x}$, where i is an integer greater than or equal to 1 and less than or equal to X.

$M_{i,x}$ represents the i-th first time-domain sub-range in the first period, corresponding to the i-th P1.

In some embodiments, the time-domain positions of the first uplink subband within $M_{i,x}$ are determined according to at least one of: a start reference time unit group of the first uplink subband within $M_{i,x}$; a number of reference time unit groups of the first uplink subband within $M_{i,x}$; or an end reference time unit group of the first uplink subband within $M_{i,x}$.

The determination of the time-domain positions of the first uplink subband within $M_{i,x}$ can be made with reference to the determination of the time-domain positions of the first uplink subband within the first time-domain range described above, and the details will not be described here.

In some embodiments, the indication value for the start reference time unit group of the first uplink subband within $M_{i,x}$ and the indication value for the number of reference time unit groups of the first uplink subband within $M_{i,x}$ are encoded to obtain an i-th first sub-SLIV. The time-domain positions of the first uplink subband within $M_{i,x}$ are determined according to the i-th first sub-SLIV.

The calculation principle of the i-th first sub-SLIV is similar to the calculation principle of the first sub-SLIV above, and will not be repeated here. The total number of reference time unit groups used in the calculation process is the total number of reference time unit groups in the i-th first time-domain sub-range, and is determined according to the number of time-domain units in the i-th first time-domain sub-range and the number of time-domain units in the reference time unit group.

In some embodiments, considering that the first period is Y times "the first TDD uplink-downlink transmission period and the second TDD uplink-downlink transmission period", the first time-domain range includes Y time-domain sub-range groups, and each time-domain sub-range group includes a first time-domain sub-range and a second time-domain sub-range. In this case, not only the time-domain positions of the first uplink subband within the first time-domain sub-range and the second time-domain sub-range can be determined separately, but also the time-domain positions of the first uplink subband within respective time-domain sub-range groups can be separately determined, thus the time-domain positions of the first uplink subband can be designed in a more flexible manner, so that they are easier to adapt to delay requirements, capacity requirements, reliability requirements, and the like in different communication scenarios.

It is assumed that the first TDD uplink-downlink transmission period is expressed as P1, the second TDD uplink-downlink transmission period is expressed as P2, and the first period includes Y (P1+P2)s, the first time-domain range can be divided into Y time-domain sub-range groups, respectively expressed as $M_{1,Y}$, ...$M_{i,Y}$, ...$M_{Y,Y}$, where i is an integer greater than or equal to 1 and less than or equal to Y.

$M_{i,Y}$ represents the i-th time-domain sub-range group in the first period, corresponding to the i-th (P1+P2).

In some embodiments, the time-domain positions of the first uplink subband within the i-th first time-domain sub-range are determined according to at least one of: a start reference time unit group of the first uplink subband within the i-th first time-domain sub-range; a number of reference time unit groups of the first uplink subband within the i-th first time-domain sub-range; or an end reference time unit group of the first uplink subband within the i-th first time-domain sub-range.

The determination of the time-domain positions of the first uplink subband within the i-th first time-domain sub-range can be made with reference to the determination of the time-domain positions of the first uplink subband within the first time-domain range described above, and the details will not be described here.

In some embodiments, the time-domain positions of the first uplink subband within the i-th second time-domain sub-range are determined according to at least one of: a start reference time unit group of the first uplink subband within the i-th second time-domain sub-range; a number of reference time unit groups of the first uplink subband within the i-th second time-domain sub-range; or an end reference time unit group of the first uplink subband within the i-th second time-domain sub-range.

The determination of the time-domain positions of the first uplink subband within the i-th second time-domain sub-range can be made with reference to the determination of the time-domain positions of the first uplink subband within the second time-domain range described above, and the details will not be described here.

In some embodiments, the i-th first sub-SLIV is obtained by encoding an indication value for the start reference time unit group of the first uplink subband within the i-th first time-domain sub-range and an indication value for the number of reference time unit groups of the first uplink subband within the i-th first time-domain sub-range. The time-domain positions of the first uplink subband within the i-th first time-domain sub-range are determined according to the i-th first sub-SLIV.

The calculation principle of the i-th first sub-SLIV is similar to the calculation principle of the first sub-SLIV above, and will not be repeated here. The total number of reference time unit groups used in the calculation process is the total number of reference time unit groups in the i-th first time-domain sub-range, and is determined according to the number of time-domain units in the i-th first time-domain sub-range and the number of time-domain units in the reference time unit group.

In some embodiments, the i-th second sub-SLIV is obtained by encoding an indication value for the start reference time unit group of the first uplink subband within the i-th second time-domain sub-range and an indication value for the number of reference time unit groups of the first uplink subband within the i-th second time-domain sub-range. The time-domain positions of the first uplink subband within the i-th second time-domain sub-range are determined according to the i-th second sub-SLIV.

The calculation principle of the i-th second sub-SLIV is similar to the calculation principle of the second sub-SLIV above, and will not be repeated here. The total number of reference time unit groups used in the calculation process is the total number of reference time unit groups in the i-th second time-domain sub-range, and is determined according to the number of time-domain units in the i-th second time-domain sub-range and the number of time-domain units in the reference time unit group.

The time-domain positions of the first uplink subband within the i-th time-domain sub-range group can be determined according to the i-th first sub-SLIV and the i-th second sub-SLIV.

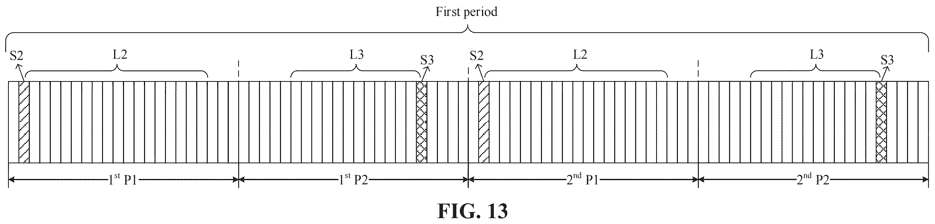

For example, when the first period is an integer multiple of the TDD dual-period or the like, the time-domain positions of the first uplink subband determined by the above method is shown in FIG. 13. In FIG. 13, Y = 2, the time-domain positions of the first uplink subband in the i-th first time-domain sub-range are determined according to the start reference time unit group S2 and the number of reference time unit groups L2, and the time-domain positions of the first uplink subband in the i-th second time-domain sub-range are determined according to the end reference time unit group E3 and the number of reference time unit groups L3.

Therefore, the embodiment of the disclosure supports providing a plurality of optional manners for determining time-domain positions when the first period is a TDD single period, the first period is a TDD dual-period, the first period is an integer multiple of the TDD single period and the first period is an integer multiple of the TDD dual-period, and has excellent flexibility in indicating or determining the time-domain positions of the first uplink subband, and supports accurate and flexible determination of the time-domain positions of the first uplink subband by the first time-domain position information for various communication scenarios. In particular, it is supported to determine consecutive time-domain positions for the first uplink subband, and the number of bits required for determination is small.

In some embodiments, if a first reference time unit group exists in the time-domain positions determined according to the above method and the first reference time unit group is a reference time unit group including an uplink symbol, the UE performs at least one of: ignoring an indication of the first operation; ignoring an indication of the first operation for the first reference time unit group; ignoring an indication of the first operation for an uplink symbol within the first reference time unit group; not performing the first operation in the first reference time unit group; not performing the first operation at uplink symbol(s) within the first reference time unit group; not expecting that the first reference time unit group exists within the time-domain positions determined according to the first time-domain position information; or expecting that the first reference time unit group does not exist within the time-domain positions determined according to the first time-domain position information.

Here, ignoring the indication of the first operation can be understood as discarding the indication of the first operation after receiving the indication. It may also be understood that the first operation is not performed after receiving the indication of the first operation.

Herein, the behavior of "not expecting" is the expectation and demand of the UE side, and the network device side does not perform the unexpected behavior of the UE side as much as possible, but the possibility that the network device side does not satisfy the "non-expected" behavior of the UE side is not excluded.

The behavior of "expecting" is also the expectation and demand of the UE side, and the network device side performs the expected behavior of the UE side as much as possible, but the possibility that the network device side does not satisfy the "expected" behavior of the UE side is not excluded.

### 6. Regarding the second time-domain position information

In some embodiments, the time-domain positions of the first uplink subband are determined according to the second time-domain position information.

In some embodiments, the second time-domain position information includes a bitmap. The manner of determining the time-domain positions of the first uplink subband according to the bitmap supports determining both consecutive time-domain positions for the first uplink subband and discrete time-domain positions for the first uplink subband, and has good flexibility.

In some embodiments, the first configuration information is used to determine the time-domain positions of the first uplink subband within the first time-domain range in the first period.

In some embodiments, the time-domain positions of the first uplink subband within the first time-domain range in the first period are determined according to the first bitmap, and each reference time unit group within the first time-domain range is in one-to-one correspondence with a respective bit in the first bitmap.

**Determining the time-domain positions of the first uplink subband according to the bitmap includes at least two manners as follows.**

**In manner 1,** a number of bits in the first bitmap is agreed by the communication protocol or configured by the first configuration information, and a number of time-domain units in the reference time unit group is determined by the UE.

Here, the number of bits in the first bitmap can also be understood as the length of the first bitmap.

In some embodiments, a number of time-domain units within each reference time unit group in the first time-domain range is determined by the UE according to a length of the first time-domain range and a number of bits in the first bitmap.

In some embodiments, the number of time-domain units within each reference time unit group in the first time-domain range is determined by the UE according to a quotient of the length of the first time-domain range and the number of bits in the first bitmap.

Taking the time-domain unit being a slot as an example, the number of slots within each reference time unit group in the first time-domain range is determined by the UE according to a quotient of the length of the first time-domain range and the number of bits in the first bitmap.

Taking the time-domain unit being a symbol as an example, a number of symbols within each reference time unit group in the first time-domain range is determined by the UE according to a quotient of the length of the first time-domain range and the number of bits in the first bitmap.

In some embodiments, the number of time-domain units within each reference time unit group in the first time-domain range is a rounding-up result or rounding-down result of the quotient of the length of the first time-domain range and the number of bits in the first bitmap.

For example, it is agreed by the communication protocol that the number of bits in the first bit bitmap is B, or it is configured by the first configuration information that the number of bits in the first bit bitmap is B. The B bits are in one-to-one correspondence with the B reference time unit groups. Exemplarily, the B bits are arranged from the higher bit to the lower bit, and are in one-to-one correspondence with the B reference time unit groups.

It is assumed that the number of time-domain units in the first time-domain range is denoted as M', and the number of time-domain units in the reference time unit group is denoted as G', then $G' = \left\lceil \frac{M'}{B} \right\rceil$ or $G' = \lfloor \frac{M'}{B} \rfloor$, where "$\lceil \ \rceil$" represents rounding up, and "$\lfloor \ \rfloor$" represents rounding down.

In some embodiments, the numbers of time-domain units in a part of the B reference time unit groups are different.

In some embodiments, among the B reference time unit groups, the first $M' - \lfloor \frac{M'}{B} \rfloor * B$ reference time unit groups contain $\left\lceil \frac{M'}{B} \right\rceil$ symbols or slots, and the $B\text{-}M' + \lfloor \frac{M'}{B} \rfloor * B$ time unit groups contain $\lfloor \frac{M'}{B} \rfloor$ symbols/slots.

Exemplarily, as shown in FIG. 9, B = 20, M'=50 symbols, $M' - \lfloor \frac{M'}{B} \rfloor * B = 50 - 2 * 20 = $ 10, and each of reference time unit groups corresponding to first 10 bits arranged from the higher bit to the lower bit in the first bitmap includes $\left\lceil \frac{M'}{B} \right\rceil = \left\lceil \frac{50}{20} \right\rceil = 3$ symbols. $B\text{-}M' + \lfloor \frac{M'}{B} \rfloor * B = 20 - 50 + 2 * 20 = 10$ , each of the reference time unit groups corresponding to the last 10 bits arranged from the high bit to the low bit in the first bitmap includes $\lfloor \frac{M'}{B} \rfloor = \lfloor \frac{50}{20} \rfloor = 2$ symbols.

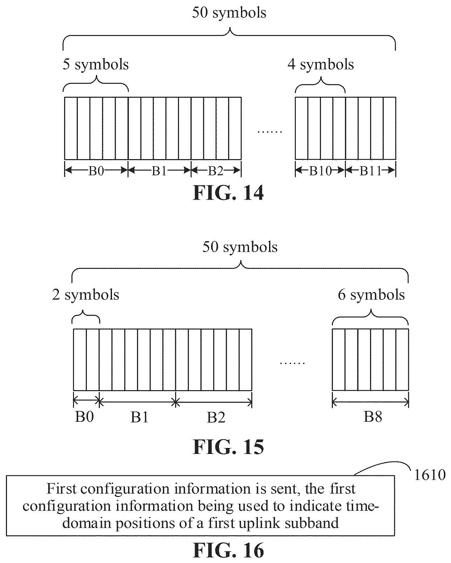

Exemplarily, as shown in FIG. 14, the first configuration information configures that B = 12, M'= 50 symbols, $\lceil \frac{M'}{B} \rceil = 5$, and $\lfloor \frac{M'}{B} \rfloor = 4$. $M' - \lfloor \frac{M'}{B} \rfloor * B = 50 - 4 * 12 = 2$, and $B - M' + \lfloor \frac{M'}{B} \rfloor * B = 12 - 50 + 4 * 12 = 10$. These 12 bits are denoted as B0 to B11, and these 12 bits are in one-to-one correspondence with 12 reference time unit groups. The first 2 reference time unit groups among the 12 reference time unit groups each include 5 symbols, and the last 10 reference time unit groups each include 4 symbols.

**In manner 2,** a number of bits in the first bitmap is determined by the UE, and a number of time-domain units within the reference time unit group is agreed by a communication protocol, or configured by the first configuration information.

Here, the number of bits in the first bitmap can also be understood as the length of the first bitmap.

In some embodiments, the number of bits in the first bitmap is determined according to the first time-domain range and the reference time unit group.

In some embodiments, the number of bits in the first bitmap is determined according to a quotient of the length of the first time-domain range and the number of time-domain units within the reference time unit group.

Taking the time-domain unit being a slot as an example, the number of bits in the first bitmap is determined by the UE according to a quotient of the length of the first time-domain range and the number of slots within the reference time unit group.

Taking the time-domain unit being a symbol as an example, the number of bits in the first bitmap is determined by the UE according to a quotient of the length of the first time-domain range and the number of symbols within the reference time unit group.

In some embodiments, the number of bits in the first bitmap is a rounding-up or rounding-down result of a quotient of the length of the first time-domain range and the number of slots within the reference time unit group.

Exemplarily, the number of time-domain units in the reference time unit group is agreed by a communication protocol or configured by the first configuration information as G'. It is assumed that the number of time-domain units in the first time-domain range is denoted by M', and the number of bits in the first bitmap is denoted by B.

$$B = \lceil M' + (M' \bmod G')/G' \rceil \text{, or } B = \lceil M'/G' \rceil \text{, where "} \lceil \ \rceil \text{" represents rounding up.}$$

The B bits are in one-to-one correspondence with the B reference time unit groups. Exemplarily, the B bits are arranged from the higher bit to the lower bit, and are in one-to-one correspondence with the B reference time unit groups.

However, there may be a case where the first time-domain range cannot be equally divided into B reference time unit groups, and then the number of time-domain units within a portion of the reference time unit groups may be separately adjusted.

Exemplarily, as shown in FIG. 15, it is agreed by the communication protocol that G'= 6 symbols, i.e., it is agreed by the communication protocol that 6 symbols are included in one reference time unit group. If M'= 50 symbols, $B = \lceil M'/G' \rceil = \lceil 50/6 \rceil = 9$. Therefore, the first bitmap includes 9 bits, denoted as B0 to B8, respectively, which are in one-to-one correspondence with 9 reference time unit groups from the high bit to the low bit. The number of symbols within the first one of the 9 reference time unit groups is adjusted to G' - M' mod G' = 6 - 50 mod 6 = 2, and the number of symbols within other reference time unit groups is still G' = 6 symbols. Alternatively, the number of symbols within the last one of the 9 reference time unit groups is adjusted to G' - M' mod G' = 6 - 50 mod 6 = 2, and the number of symbols within other reference time unit groups is still G' = 6 symbols.

Exemplarily, it is configured by the first configuration information that G'= 4 symbols, that is, it is configured by the first configuration information that 4 symbols are included in one reference time unit group. If M'= 50 symbols, $B = \lceil M'/G' \rceil = \lceil 50/4 \rceil = 13$. Therefore, the first bitmap includes 13 bits, which are in one-to-one correspondence with 13 reference time unit groups from the high bit to the low bit. G' - M' mod G' = 4 - 50 mod 4 = 2, and the number of symbols within the first one of the 9 reference time unit groups is adjusted to 2, and the number of symbols within the other reference time unit groups is still 4. Alternatively, the number of symbols within the last one of the 9 reference time unit groups is adjusted to 2, and the number of symbols within the other reference time unit groups is still 4.

The manner of determining the first time-domain range according to the bitmap is applicable to a case where the first period is a first TDD uplink-downlink transmission period, also applicable to a case where the first period is a sum of the first TDD uplink-downlink transmission period and the second TDD uplink-downlink transmission period, also applicable to a case where the first period is an integer multiple of the first TDD uplink-downlink transmission period, and further applicable to a case where the first period is an integer multiple of the sum of the first TDD uplink-downlink transmission period and the second TDD uplink-downlink transmission period. That is, when determining the first time-domain range, various parameters required for determining the first time-domain range may be agreed or configured by disregarding whether the first period can be further divided into multiple sub-periods and instead treating the first period as a whole.

In some embodiments, considering that the first period is the sum of the first TDD uplink-downlink transmission period and the second TDD uplink-downlink transmission period, the first time-domain range includes a first time-domain sub-range and a second time-domain sub-range. In this case, the second time-domain position information includes a first sub-bitmap and a second sub-bitmap, the time-domain positions of the first uplink subband within the first time-domain sub-range may be determined according to the first sub-bitmap, and the time-domain positions of the first uplink subband within the second time-domain sub-range may be determined according to the second sub-bitmap. The positions of the first uplink subband in the first time-domain sub-range and in the second time-domain sub-range are separately determined by the two sub-bitmaps, so that the design of the time-domain positions of the first uplink subband is more flexible and easier to adapt to delay requirements, capacity requirements, reliability requirements, etc. in different communication scenarios.

In some embodiments, the first sub-bitmap is the same as or different from the second sub-bitmap.

In some embodiments, the first sub-bit bitmap and the second sub-bit bitmap are determined in the same manner or different manners.

Indeed, for the manner of determining the time-domain positions of the first uplink subband based on the first sub-bitmap and the second sub-bitmap, reference can be made to the manner 1 and manner 2 described above. The difference is that when the first sub-bitmap is calculated, the number of time-domain units in the first time-domain sub-range $M_1'$ replaces the number of time-domain units in the first time-domain range M'; and when the second sub-bitmap is calculated, the number of time-domain units in the second time-domain sub-range $M_2'$ replaces the number of time-domain units in the first time-domain rangeM', and description thereof is not repeated here.

In some embodiments, the first time-domain range includes X first time-domain sub-ranges, considering a case where the first period is X times the first TDD uplink-downlink transmission period, and time-domain positions of the first uplink subband within the first time-domain sub-range can be determined according to the first sub-bitmap. The X first time-domain sub-ranges correspond to the X first sub-bitmaps, respectively. In this case, the second time-domain position information includes X first sub-bitmaps, the time-domain positions of the first uplink subband within respective first time-domain sub-ranges can be determined respectively by the X sub-bitmaps, thus the time-domain positions of the first uplink subband can be designed in a more flexible manner, so that they are easier to adapt to delay requirements, capacity requirements, reliability requirements, and the like in different communication scenarios.

The i-th one of the X first sub-bitmaps is determined in a similar manner as the first sub-bitmap is determined above. The difference is that when the i-th first sub-bitmap is calculated, the number of time-domain units in the i-th first time-domain sub-range replaces the number of time-domain units in the first time-domain range, and description thereof is not repeated here.

In some embodiments, considering that the first period is Y times "the first TDD uplink-downlink transmission period and the second TDD uplink-downlink transmission period", the first time-domain range includes Y time-domain sub-range groups. Each time-domain sub-range group includes one first time-domain sub-range and one second time-domain sub-range. The time-domain positions of the first uplink subband within the first time-domain sub-range may be determined according to the first sub-bitmap, and the time-domain positions of the first uplink subband within the second time-domain sub-range may be determined according to the second sub-bitmap. In this case, the second time-domain position information includes Y sub-bitmap groups, and each sub-bitmap group includes one first sub-bitmap and one second sub-bitmap. Not only the time-domain positions of the first uplink subband within the first time-domain sub-range and the second time-domain sub-range can be separately determined by the first sub-bitmap and the second sub-bitmap, but also the time-domain positions of the first uplink subband within respective time-domain sub-range groups can be respectively determined by the Y sub-bitmap groups, thus the time-domain positions of the first uplink subband can be designed in a more flexible manner, so that they are easier to adapt to delay requirements, capacity requirements, reliability requirements, and the like in different communication scenarios.

The time-domain positions of the first uplink subband within the i-th time-domain sub-range group can be determined according to the i-th first sub-bitmap and the i-th second sub-bitmap. When the i-th first sub-bitmap is calculated, the number of time-domain units in the i-th first time-domain sub-range replaces the number of time-domain units in the first time-domain range, and the description thereof is not repeated here. When the i-th second sub-bitmap is calculated, the number of time-domain units in the i-th second time-domain sub-range replaces the number of time-domain units in the first time-domain range, and the description thereof is not repeated here.

Therefore, the embodiment of the disclosure supports providing a plurality of optional determination manners based on bitmap when the first period is a TDD single period, the first period is a TDD dual-period, the first period is an integer multiple of the TDD single period and the first period is an integer multiple of the TDD dual-period, and has excellent flexibility in indicating or determining the time-domain positions of the first uplink subband, and supports accurate and flexible determination of the time-domain positions of the first uplink subband by the bitmap for various communication scenarios.

In some embodiments, if a first reference time unit group exists in the time-domain positions determined according to the second time-domain position information and the first reference time unit group is a reference time unit group including an uplink symbol, the UE performs at least one of: ignoring an indication of the first operation; ignoring an indication of the first operation for the first reference time unit group; ignoring an indication of the first operation for an uplink symbol within the first reference time unit group; not performing the first operation in the first reference time unit group; not performing the first operation at uplink symbol(s) within the first reference time unit group; not expecting that the first reference time unit group exists within the time-domain positions determined according to the second time-domain position information; or expecting that the first reference time unit group does not exist within the time-domain positions determined according to the second time-domain position information.

Here, ignoring the indication of the first operation can be understood as discarding the indication of the first operation after receiving the indication. It may also be understood that the first operation is not performed after receiving the indication of the first operation.

Herein, the behavior of "not expecting" is the expectation and demand of the UE side, and the network device side does not perform the unexpected behavior of the UE side as much as possible, but the possibility that the network device side does not satisfy the "non-expected" behavior of the UE side is not excluded.

The behavior of "expecting" is also the expectation and demand of the UE side, and the network device side performs the expected behavior of the UE side as much as possible, but the possibility that the network device side does not satisfy the "expected" behavior of the UE side is not excluded.

It is to be noted that the contents of the above six aspects may be used alone or in combination.

Exemplarily, the time-domain positions of the first uplink subband are determined according to the first period. Or, the time-domain positions of the first uplink subband are determined according to the first subcarrier spacing. Or, the time-domain positions of the first uplink subband are determined according to the first time-domain range. Or, the time-domain positions of the first uplink subband are determined according to the reference time unit group. Or, the time-domain positions of the first uplink subband are determined according to the first time-domain position information. Or, the time-domain positions of the first uplink subband are determined according to the second time-domain position information.

Or, the time-domain positions of the first uplink subband are determined according to the first period and the first subcarrier spacing. Or, the time-domain positions of the first uplink subband are determined according to the first period and the first time-domain range. Or, the time-domain positions of the first uplink subband are determined according to the first time-domain range and the reference time unit group. Or, the time-domain positions of the first uplink subband are determined according to the first period, the first time-domain range and the reference time unit group. Or, the time-domain positions of the first uplink subband are determined according to the first time-domain range and the first time-domain position information. Or, the time-domain positions of the first uplink subband are determined according to the first period and the first time-domain position information. Or, the time-domain positions of the first uplink subband are determined according to the first time-domain range and the second time-domain position information. Or, the time-domain positions of the first uplink subband are determined according to the first period and the second time-domain position information; and the like. Some examples of combinations have been introduced earlier, so all possible combinations are not listed here.

**In operation 430,** uplink transmission is performed on the first uplink subband according to the time-domain positions of the first uplink subband.

In some embodiments, the first uplink subband is an uplink subband in the SBFD technology. It may also be understood that the first uplink subband is an uplink subband in the XDD technology. It may also be understood that the first uplink subband is an uplink subband corresponding to a time-domain unit supporting a first operation, and the first operation refers to a technique in which data can be sent and received simultaneously on different subbands corresponding to a same time-domain unit.

In some embodiments, a first reference time unit group exists in the time-domain positions determined based on the first configuration information and the first reference time unit group is a reference time unit group including an uplink symbol, then the UE performs at least one of: ignoring the first configuration information; ignoring configuration information in the first configuration information, which is for the first reference time unit group; ignoring configuration information in the first configuration information, which is for uplink symbols within the first reference time unit group; not performing the first operation in the first reference time unit group; not performing the first operation at uplink symbol(s) within the first reference time unit group.

Here, ignoring the first configuration information can be understood as discarding the first configuration information after receiving it. It may also be understood as not using configuration in the first configuration information after receiving the first configuration information.

In some embodiments, the first reference time unit group satisfies at least one of : the first reference time unit group does not include a first uplink subband; the UE assumes that the first reference time unit group does not include a first uplink subband; uplink symbols within the first reference time unit group do not include the first uplink subband; the UE assumes that the uplink symbols within the first reference time unit group do not include the first uplink subband; the UE does not expect the presence of the first reference time unit group within the time-domain positions determined based on the first configuration information; or the UE expects that the first reference time unit group does not exist within the time-domain positions indicated based on the first configuration information.

Herein, the fact that the first reference time unit group does not include the first uplink subband may be understood as: the first reference time unit group does not include a time-domain unit corresponding to the first uplink subband, or the time-domain unit occupied by the first uplink subband is not located in the first reference time unit group, or frequency-domain resources corresponding to the first reference world unit group do not include the first uplink subband.

Here, when the UE assumes that the first reference time unit group does not include the first uplink subband, the first reference time unit group may actually include a uplink subband or may not actually include the uplink subband, but regardless of whether the first reference time unit group actually includes or not, the UE will consider that that first reference time unit group does not include the first uplink subband. The case that the UE assumes that the uplink symbols within the first reference time unit group do not include the first uplink subband can be understood in a similar way, and the description thereof will not be repeated.

Herein, the behavior of "not expecting" is the expectation and demand of the UE side, and the network device side does not perform the unexpected behavior of the UE side as much as possible, but the possibility that the network device side does not satisfy the "non-expected" behavior of the UE side is not excluded.

The behavior of "expecting" is also the expectation and demand of the UE side, and the network device side performs the expected behavior of the UE side as much as possible, but the possibility that the network device side does not satisfy the "expected" behavior of the UE side is not excluded.

In summary, the method provided by the embodiment of the disclosure supports determining the time-domain positions of the first uplink subband by one or more of the first period, the first subcarrier spacing, the first time-domain range, the reference time unit group, the first time-domain position information, and the second time-domain position information, which is very flexible, and is suitable for determining the time-domain positions of the first uplink subband in various communication scenarios. It not only supports low-complexity determination methods, but also meets the determination requirements in low-latency and high-capacity communication scenarios. By designing the above six aspects separately, a reliable and feasible solution is provided for determining the time-domain positions of the first uplink subband. The advantages of these six aspects when designed separately still exist when they are freely combined.

FIG. 16 is a schematic flowchart of a method for determining time-domain positions provided by some exemplary embodiments of the disclosure. Description is made schematically by taking the method being performed by a network device as an example, and the network device may be implemented as the network device 11 as shown in FIG. 1. The method includes at least some of the operations below.

**In operation 1610,** first configuration information is sent, the first configuration information being used to determine time-domain position(s) of a first uplink subband.

In the disclosure, the subband may also be referred to as a frequency subband. The uplink subband can be understood as a part of frequency-domain resources within a single carrier that are only used for uplink transmission.

In the disclosure, the time-domain positions of the first uplink subband may also be understood as time-domain unit(s) occupied by the first uplink subband.

In the disclosure, the time-domain unit includes at least one of: a frame, a subframe, a slot, a mini-slot, a sub-slot, a symbol, a symbol group, or a time-domain unit based on other time-domain units.

In some embodiments, the time-domain positions of the first uplink subband are determined by the UE according to the first configuration information.

In some embodiments, the time-domain positions of the first uplink subband are determined according to at least one of: a first period, a first subcarrier spacing, a first time-domain range, a reference time unit group, first time-domain position information, or second time-domain position information.

In some embodiments, the first time-domain position information includes one or more of a start indication value, a length indication value, and an end indication value.

In some embodiments, the second position information includes a bitmap.

In some embodiments, the first uplink subband is an uplink subband in the SBFD technology. It may also be understood that the first uplink subband is an uplink subband in the XDD technology. It may also be understood that the first uplink subband is an uplink subband corresponding to a time-domain unit supporting a first operation, and the first operation refers to a technique in which data can be sent and received simultaneously on different subbands corresponding to a same time-domain unit. Exemplarily, the first operation includes an SBFD operation. Exemplarily, the first operation includes an XDD operation. It can be understood that the first operation may also be referred to as another operation other than the SBFD operation and the XDD operation, such as a new term that may be agreed in future communication protocols, and the disclosure does not limit the specific naming of the first operation.

To sum up, the method provided by the embodiment of the disclosure supports the determination of the time-domain positions of the first uplink subband by the first configuration information, so that both the sending end and the receiving end of the first configuration information can determine the time-domain positions of the first uplink subband, which is helpful to improve communication efficiency and reliability in a communication system.

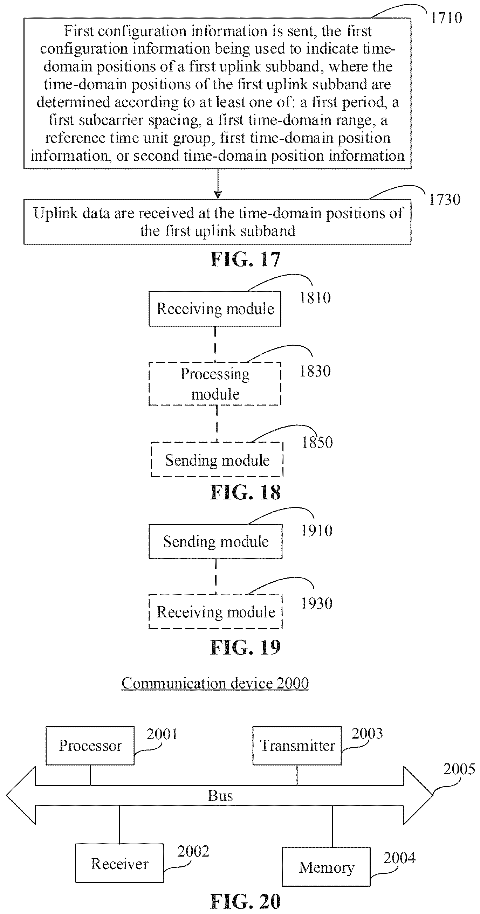

In some embodiments, the operation 1610 may be implemented as an operation 1710. Optionally, in addition to the operation 1710, the method for determining the time-domain positions may further include an operation 1730, as shown in FIG. 17.

FIG. 17 is a schematic flowchart of a method for determining time-domain positions provided by some exemplary embodiments of the disclosure. Description is made schematically by taking the method being performed by a network device as an example, and the network device may be implemented as the network device 11 as shown in FIG. 1. The method includes at least some of the operations below.

**In the operation 1710,** first configuration information is sent, the first configuration information being used to determine time-domain position(s) of a first uplink subband, where the time-domain positions of the first uplink subband are determined according to at least one of: a first period, a first subcarrier spacing, a first time-domain range, a reference time unit group, first time-domain position information, or second time-domain position information.

In some embodiments, the first configuration information includes at least one of: a first period, a first subcarrier spacing, a first time-domain range, a reference time unit group, first time-domain position information, or second time-domain position information.

For related contents, reference can be made to the operation 410, and will not be repeated here.

**In operation 1730,** uplink data are received at the time-domain positions of the first uplink subband.

In some embodiments, the first uplink subband is an uplink subband in the SBFD technology. It may also be understood that the first uplink subband is an uplink subband in the XDD technology. It may also be understood that the first uplink subband is an uplink subband corresponding to a time-domain unit supporting a first operation, and the first operation refers to a technique in which data can be sent and received simultaneously on different subbands corresponding to a same time-domain unit.

In summary, the method provided by the embodiment of the disclosure supports determining the time-domain positions of the first uplink subband by one or more of the first period, the first subcarrier spacing, the first time-domain range, the reference time unit group, the first time-domain position information, and the second time-domain position information, which is very flexible, and is suitable for determining the time-domain positions of the first uplink subband in various communication scenarios. It not only supports low-complexity determination methods, but also meets the determination requirements in low-latency and high-capacity communication scenarios. By designing the above six aspects separately, a reliable and feasible solution is provided for determining the time-domain positions of the first uplink subband. The advantages of these six aspects when designed separately still exist when they are freely combined.

FIG. 18 illustrates a structural diagram of an apparatus for determining time-domain positions provided by an exemplary embodiment of the disclosure. The apparatus can be implemented as the terminal device shown in FIG. 3 or FIG. 4, or implemented as a part of the UE shown in FIG. 3 or FIG. 4. The terminal device may be a terminal device as shown in FIG. 1. The apparatus includes a receiving module 1810. Optionally, the apparatus further includes a processing module 1830 and/or a sending module 1850.

The receiving module 1810 is configured to receive first configuration information, the first configuration information being used to determine time-domain position(s) of a first uplink subband.

Herein, the time-domain positions of the first uplink subband are determined according to at least one of: a first period, a first subcarrier spacing, a first time-domain range, a reference time unit group, first time-domain position information, or second time-domain position information.

In some embodiments, the first configuration information is used to determine the time-domain positions of the first uplink subband within the first period.

In some embodiments, the first period is determined according to a first TDD uplink-downlink transmission period, or the first period is determined according to the first TDD uplink-downlink transmission period and a first parameter X, X being an integer greater than 1.

In some embodiments, the first period is the first TDD uplink-downlink transmission period, or the first period is X times the first TDD uplink-downlink transmission period.

In some embodiments, the first period is determined according to a first TDD uplink-downlink transmission period and a second TDD uplink-downlink transmission period, or the first period is determined according to the first TDD uplink-downlink transmission period, the second TDD uplink-downlink transmission period and a second parameter Y, Y being an integer greater than 1.

In some embodiments, the first period is a sum of the first TDD uplink-downlink transmission period and the second TDD uplink-downlink transmission period, or the first period includes Y times the sum of the first TDD uplink-downlink transmission period and the second TDD uplink-downlink transmission period.

In some embodiments, the first TDD uplink-downlink transmission period and/or the second TDD uplink-downlink transmission period are configured by first signaling, the first signaling being used to configure TDD uplink and downlink common parameters.

In some embodiments, the first period is configured by the first configuration information, or the first period is agreed by a communication protocol.

In some embodiments, the first period satisfies at least one of: the UE expects the first period to be divisible by 20 ms; the UE expects the first period to be an integer multiple of a first TDD uplink-downlink transmission period; or the UE expects the first period to be an integer multiple of a sum of the first TDD uplink-downlink transmission period and a second TDD uplink-downlink transmission period.

In some embodiments, the first subcarrier spacing is less than or equal to a second subcarrier spacing, wherein the second subcarrier spacing is configured by first signaling, and the first signaling is used to configure TDD uplink and downlink common parameters.

In some embodiments, the first subcarrier spacing is less than or equal to a subcarrier spacing of a first bandwidth portion (BWP), wherein the first BWP includes: any uplink BWP on a first carrier, and/or any downlink BWP on the first carrier, the first carrier being a carrier on which the first uplink subband is located.

In some embodiments, the first subcarrier spacing is configured by the first configuration information, or the first subcarrier spacing is agreed by a communication protocol.

In some embodiments, the first configuration information is used to determine the time-domain positions of the first uplink subband within the first time-domain range in the first period.

In some embodiments, the first time-domain position information includes at least one of: a first start indication value for indicating a start reference time unit group of the first uplink subband within the first time-domain range; a first length indication value for indicating a number of reference time unit groups of the first uplink subband within the first time-domain range; or a first end indication value for indicating an end reference time unit group of the first uplink subband within the first time-domain range.

In some embodiments, the first start indication value is agreed by a communication protocol, and the first length indication value is configured by the first configuration information; or the first start indication value is configured by the first configuration information, and the first length indication value is agreed by the communication protocol; or the first start indication value and the first length indication value are configured by the first configuration information; or the first end indication value is agreed by the communication protocol, and the first length indication value is configured by the first configuration information; or the first end indication value is configured by the first configuration information, and the first length indication value is agreed by the communication protocol; or the first end indication value and the first length indication value are configured by the first configuration information.

In some embodiments, the second time-domain position information includes a first bitmap, the time-domain positions of the first uplink subband within the first time-domain range in the first period are determined according to the first bitmap, and each reference time unit group within the first time-domain range is in one-to-one correspondence with a respective bit in the first bitmap.

In some embodiments, a number of bits in the first bitmap is agreed by a communication protocol, or configured by the first configuration information.

In some embodiments, a number of time-domain units within one reference time unit group within the first time-domain range is determined according to the first time-domain range and a number of bits in the first bitmap.

In some embodiments, a number of time-domain units within one reference time unit group within the first time-domain range is determined according to a quotient of a length of the first time-domain range and a number of bits in the first bitmap.

In some embodiments, a number of bits in the first bitmap is determined according to the first time-domain range and the reference time unit group.

In some embodiments, the number of bits in the first bitmap is determined according to a quotient of the length of the first time-domain range and the number of time-domain units within the reference time unit group.

In some embodiments, a number of time-domain units within the reference time unit group is agreed by a communication protocol, or configured by the first configuration information.

In some embodiments, the reference time unit group includes at least one of: a first number of slots, the first number being an integer greater than or equal to 1; a second number of sub-slots, the second number being an integer greater than or equal to 1; a third number of symbols, the third number being an integer greater than or equal to 1; or a fourth number of symbol groups, the fourth number being an integer greater than or equal to 1.

In some embodiments, the first time-domain range is determined according to at least one of: the first period; the first subcarrier spacing; uplink slots within the first period; downlink slots within the first period; flexible slots within the first period; uplink symbols within the first period; downlink symbols within the first period; or flexible symbols within the first period.

In some embodiment, the first time-domain range includes one of: all slots within the first period; remaining slots other than uplink slots among all slots within the first period; remaining slots other than first slots among all slots within the first period, the first slots being slots including uplink symbols; downlink slots within the first period; downlink slots and flexible slots within the first period; all symbols within the first period; remaining symbols other than uplink symbols among all symbols within the first period; downlink symbols within the first period; downlink symbols and flexible symbols within the first period; a time-domain range formed from a first one of slots to a last one of downlink slots within the first period; a time-domain range formed from the first one of slots to a last one of flexible slots within the first period; a time-domain range formed from a first one of symbols to a last one of downlink symbols within the first period; and a time-domain range formed from the first one of symbols to a last one of flexible symbols within the first period.

In some embodiment, the first time-domain range includes at least two time-domain sub-ranges, and one of the at least two time-domain sub-ranges is determined according to at least one of: a first TDD uplink-downlink transmission period; a second TDD uplink-downlink transmission period; the first subcarrier spacing; uplink slots within the first TDD uplink-downlink transmission period; downlink slots within the first TDD uplink-downlink transmission period; flexible slots within the first TDD uplink-downlink transmission period; uplink symbols within the first TDD uplink-downlink transmission period; downlink symbols within the first TDD uplink-downlink transmission period; flexible symbols within the first TDD uplink-downlink transmission period; uplink slots within the second TDD uplink-downlink transmission period; downlink slots within the second TDD uplink-downlink transmission period; flexible slots within the second TDD uplink-downlink transmission period; uplink symbols within the second TDD uplink-downlink transmission period; downlink symbols within the second TDD uplink-downlink transmission period; or flexible symbols within the second TDD uplink-downlink transmission period.

In some embodiments, the at least two time-domain ranges include a first time-domain sub-range and a second time-domain sub-range, wherein the first time-domain sub-range is determined according to the first TDD uplink-downlink transmission period, and the second time-domain sub-range is determined according to the second TDD uplink-downlink transmission period.

In some embodiments, the first time-domain sub-range includes one of: all slots within the first TDD uplink-downlink transmission period; remaining slots other than uplink slots among all slots within the first TDD uplink-downlink transmission period; remaining slots other than first slots among all slots within the first TDD uplink-downlink transmission period, the first slots being slots including uplink symbols; downlink slots within the first TDD uplink-downlink transmission period; downlink slots and flexible slots within the first TDD uplink-downlink transmission period; all symbols within the first TDD uplink-downlink transmission period; remaining symbols other than uplink symbols among all symbols within the first TDD uplink-downlink transmission period; downlink symbols within the first TDD uplink-downlink transmission period; downlink symbols and flexible symbols within the first TDD uplink-downlink transmission period; a time-domain range formed from a first one of slots to a last one of downlink slots within the first TDD uplink-downlink transmission period; a time-domain range formed from the first one of slots to a last one of flexible slots within the first TDD uplink-downlink transmission period; a time-domain range formed from a first one of symbols to a last one of downlink symbols within the first TDD uplink-downlink transmission period; and a time-domain range formed from the first one of symbols to a last one of flexible symbols within the first TDD uplink-downlink transmission period.

In some embodiments, the second time-domain sub-range includes one of: all slots within the second TDD uplink-downlink transmission period; remaining slots other than uplink slots among all slots within the second TDD uplink-downlink transmission period; remaining slots other than first slots among all slots within the second TDD uplink-downlink transmission period, the first slots being slots including uplink symbols; downlink slots within the second TDD uplink-downlink transmission period; downlink slots and flexible slots within the second TDD uplink-downlink transmission period; all symbols within the second TDD uplink-downlink transmission period; remaining symbols other than uplink symbols among all symbols within the second TDD uplink-downlink transmission period; downlink symbols within the second TDD uplink-downlink transmission period; downlink symbols and flexible symbols within the second TDD uplink-downlink transmission period; a time-domain range formed from a first one of slots to a last one of downlink slots within the second TDD uplink-downlink transmission period; a time-domain range formed from the first one of slots to a last one of flexible slots within the second TDD uplink-downlink transmission period; a time-domain range formed from a first one of symbols to a last one of downlink symbols within the second TDD uplink-downlink transmission period; and a time-domain range formed from the first one of symbols to a last one of flexible symbols within the second TDD uplink-downlink transmission period.

In some embodiments, the first time-domain position information includes at least one of: a first start indication sub-value for indicating a start reference time unit group of the first uplink subband within the first time-domain sub-range; a first length indication sub-value for indicating a number of reference time unit groups of the first uplink subband within the first time-domain sub-range; a first end indication sub-value for indicating an end reference time unit group of the first uplink subband within the first time-domain sub-range; a second start indication sub-value for indicating a start reference time unit group of the first uplink subband within the second time-domain sub-range; a second length indication sub-value for indicating a number of reference time unit groups of the first uplink subband within the second time-domain sub-range; or a second end indication sub-value for indicating an end reference time unit group of the first uplink subband within the second time-domain sub-range.

In some embodiments, the second time-domain position information includes a first sub-bitmap, and/or a second sub-bitmap, the time-domain positions of the first uplink subband within the first time-domain sub-range are determined according to the first sub-bitmap, and each reference time unit group within the first time-domain range is in one-to-one correspondence with a respective bit in the first sub-bitmap.

The time-domain positions of the first uplink subband within the second time-domain sub-range are determined according to the second sub-bitmap, and each reference time unit group within the second time-domain range is in one-to-one correspondence with a respective bit in the second sub-bitmap.

In some embodiments, in a case where the time-domain positions of the first uplink subband determined according to the first configuration information include a first reference time unit group, the method further includes at least one of: ignoring the first configuration information; ignoring configuration information for the first reference time unit group in the first configuration information; or ignoring configuration information for uplink time-domain units within the first reference time unit group in the first configuration information.

The first reference time unit group satisfies at least one of: the first reference time unit group does not includes the first uplink subband; the uplink time-domain units within the first reference time unit group do not include the first uplink subband; it is not expected that the time-domain positions of the first uplink subband determined according to the first time-domain position information include the first reference time unit group; or it is not expected that the time-domain positions of the first uplink subband determined according to the second time-domain position information include the first reference time unit group, where the first reference time unit group includes the uplink time-domain units.

In some embodiments, the apparatus further includes a processing module 1830 configured to determine time-domain positions of the first uplink subband according to at least one of: a first period, a first subcarrier spacing, a first time-domain range, a reference time unit group, first time-domain position information, or second time-domain position information.

In some embodiments, the processing module 1830 is further configured to determine at least one of: the first period, the first subcarrier spacing, the first time-domain range, the reference time unit group, the first time-domain position information, or the second time-domain position information.

In some embodiments, the apparatus further includes a sending module 1850 configured to perform uplink transmission at the time-domain positions of the first uplink subband.

In some embodiments, the receiving module 1810 is configured to perform operation 310 and/or operation 410.

In some embodiments, the sending module 1850 is configured to perform operation 430.

In summary, the apparatus provided by the embodiment of the disclosure supports determining the time-domain positions of the first uplink subband by one or more of the first period, the first subcarrier spacing, the first time-domain range, the reference time unit group, the first time-domain position information, and the second time-domain position information, which is very flexible, and is suitable for determining the time-domain positions of the first uplink subband in various communication scenarios. It not only supports low-complexity determination methods, but also meets the determination requirements in low-latency and high-capacity communication scenarios. By designing the above six aspects separately, a reliable and feasible solution is provided for determining the time-domain positions of the first uplink subband. The advantages of these six aspects when designed separately still exist when they are freely combined.

FIG. 19 illustrates a structural diagram of an apparatus for determining time-domain positions provided by an exemplary embodiment of the disclosure. The apparatus can be implemented as the network device shown in FIG. 16 or FIG. 17, or implemented as a part of the network device shown in FIG. 16 or FIG. 17. The network device may be the network device 110 as shown in FIG. 1. The apparatus includes a sending module 1910. Optionally, the apparatus further includes a receiving module 1930.

The sending module 1910 is configured to send first configuration information, the first configuration information being used to determine time-domain position(s) of a first uplink subband,

Herein, the time-domain positions of the first uplink subband are determined according to at least one of: a first period, a first subcarrier spacing, a first time-domain range, a reference time unit group, first time-domain position information, or second time-domain position information.

In some embodiments, the first configuration information is used to determine the time-domain positions of the first uplink subband within the first period.

In some embodiments, the first period is determined according to a first TDD uplink-downlink transmission period, or the first period is determined according to the first TDD uplink-downlink transmission period and a first parameter X, X being an integer greater than 1.

In some embodiments, the first period is the first TDD uplink-downlink transmission period, or the first period is X times the first TDD uplink-downlink transmission period.

In some embodiments, the first period is determined according to a first TDD uplink-downlink transmission period and a second TDD uplink-downlink transmission period, or the first period is determined according to the first TDD uplink-downlink transmission period, the second TDD uplink-downlink transmission period and a second parameter Y, Y being an integer greater than 1.

In some embodiments, the first period is a sum of the first TDD uplink-downlink transmission period and the second TDD uplink-downlink transmission period, or the first period includes Y times the sum of the first TDD uplink-downlink transmission period and the second TDD uplink-downlink transmission period.

In some embodiments, the first TDD uplink-downlink transmission period and/or the second TDD uplink-downlink transmission period are configured by first signaling, the first signaling being used to configure TDD uplink and downlink common parameters.

In some embodiments, the first period is configured by the first configuration information, or the first period is agreed by a communication protocol.

In some embodiments, the first period satisfies at least one of: the UE expects the first period to be divisible by 20 ms; the UE expects the first period to be an integer multiple of a first TDD uplink-downlink transmission period; or the UE expects the first period to be an integer multiple of a sum of the first TDD uplink-downlink transmission period and a second TDD uplink-downlink transmission period.

In some embodiments, the first subcarrier spacing is less than or equal to a second subcarrier spacing, wherein the second subcarrier spacing is configured by first signaling, and the first signaling is used to configure TDD uplink and downlink common parameters.

In some embodiments, the first subcarrier spacing is less than or equal to a subcarrier spacing of a first bandwidth portion (BWP), wherein the first BWP includes: any uplink BWP on a first carrier, and/or any downlink BWP on the first carrier, the first carrier being a carrier on which the first uplink subband is located.

In some embodiments, the first subcarrier spacing is configured by the first configuration information, or the first subcarrier spacing is agreed by a communication protocol.

In some embodiments, the first configuration information is used to determine the time-domain positions of the first uplink subband within the first time-domain range in the first period.

In some embodiments, the first time-domain position information includes at least one of: a first start indication value for indicating a start reference time unit group of the first uplink subband within the first time-domain range; a first length indication value for indicating a number of reference time unit groups of the first uplink subband within the first time-domain range; or a first end indication value for indicating an end reference time unit group of the first uplink subband within the first time-domain range.

In some embodiments, the first start indication value is agreed by a communication protocol, and the first length indication value is configured by the first configuration information; or the first start indication value is configured by the first configuration information, and the first length indication value is agreed by the communication protocol; or the first start indication value and the first length indication value are configured by the first configuration information; or the first end indication value is agreed by the communication protocol, and the first length indication value is configured by the first configuration information; or the first end indication value is configured by the first configuration information, and the first length indication value is agreed by the communication protocol; or the first end indication value and the first length indication value are configured by the first configuration information.

In some embodiments, the second time-domain position information includes a first bitmap, the time-domain positions of the first uplink subband within the first time-domain range in the first period are determined according to the first bitmap, and each reference time unit group within the first time-domain range is in one-to-one correspondence with a respective bit in the first bitmap.

In some embodiments, a number of bits in the first bitmap is agreed by a communication protocol, or configured by the first configuration information.

In some embodiments, a number of time-domain units within one reference time unit group within the first time-domain range is determined according to the first time-domain range and a number of bits in the first bitmap.

In some embodiments, a number of time-domain units within one reference time unit group within the first time-domain range is determined according to a quotient of a length of the first time-domain range and a number of bits in the first bitmap.

In some embodiments, a number of bits in the first bitmap is determined according to the first time-domain range and the reference time unit group.

In some embodiments, the number of bits in the first bitmap is determined according to a quotient of the length of the first time-domain range and the number of time-domain units within the reference time unit group.

In some embodiments, a number of time-domain units within the reference time unit group is agreed by a communication protocol, or configured by the first configuration information.

In some embodiments, the reference time unit group includes at least one of: a first number of slots, the first number being an integer greater than or equal to 1; a second number of sub-slots, the second number being an integer greater than or equal to 1; a third number of symbols, the third number being an integer greater than or equal to 1; or a fourth number of symbol groups, the fourth number being an integer greater than or equal to 1.

In some embodiments, the first time-domain range is determined according to at least one of: the first period; the first subcarrier spacing; uplink slots within the first period; downlink slots within the first period; flexible slots within the first period; uplink symbols within the first period; downlink symbols within the first period; or flexible symbols within the first period.

In some embodiment, the first time-domain range includes one of: all slots within the first period; remaining slots other than uplink slots among all slots within the first period; remaining slots other than first slots among all slots within the first period, the first slots being slots including uplink symbols; downlink slots within the first period; downlink slots and flexible slots within the first period; all symbols within the first period; remaining symbols other than uplink symbols among all symbols within the first period; downlink symbols within the first period; downlink symbols and flexible symbols within the first period; a time-domain range formed from a first one of slots to a last one of downlink slots within the first period; a time-domain range formed from the first one of slots to a last one of flexible slots within the first period; a time-domain range formed from a first one of symbols to a last one of downlink symbols within the first period; and a time-domain range formed from the first one of symbols to a last one of flexible symbols within the first period.

In some embodiment, the first time-domain range includes at least two time-domain sub-ranges, and one of the at least two time-domain sub-ranges is determined according to at least one of: a first TDD uplink-downlink transmission period; a second TDD uplink-downlink transmission period; the first subcarrier spacing; uplink slots within the first TDD uplink-downlink transmission period; downlink slots within the first TDD uplink-downlink transmission period; flexible slots within the first TDD uplink-downlink transmission period; uplink symbols within the first TDD uplink-downlink transmission period; downlink symbols within the first TDD uplink-downlink transmission period; flexible symbols within the first TDD uplink-downlink transmission period; uplink slots within the second TDD uplink-downlink transmission period; downlink slots within the second TDD uplink-downlink transmission period; flexible slots within the second TDD uplink-downlink transmission period; uplink symbols within the second TDD uplink-downlink transmission period; downlink symbols within the second TDD uplink-downlink transmission period; or flexible symbols within the second TDD uplink-downlink transmission period.

In some embodiments, the at least two time-domain ranges include a first time-domain sub-range and a second time-domain sub-range, wherein the first time-domain sub-range is determined according to the first TDD uplink-downlink transmission period, and the second time-domain sub-range is determined according to the second TDD uplink-downlink transmission period.

In some embodiments, the first time-domain sub-range includes one of: all slots within the first TDD uplink-downlink transmission period; remaining slots other than uplink slots among all slots within the first TDD uplink-downlink transmission period; remaining slots other than first slots among all slots within the first TDD uplink-downlink transmission period, the first slots being slots including uplink symbols; downlink slots within the first TDD uplink-downlink transmission period; downlink slots and flexible slots within the first TDD uplink-downlink transmission period; all symbols within the first TDD uplink-downlink transmission period; remaining symbols other than uplink symbols among all symbols within the first TDD uplink-downlink transmission period; downlink symbols within the first TDD uplink-downlink transmission period; downlink symbols and flexible symbols within the first TDD uplink-downlink transmission period; a time-domain range formed from a first one of slots to a last one of downlink slots within the first TDD uplink-downlink transmission period; a time-domain range formed from the first one of slots to a last one of flexible slots within the first TDD uplink-downlink transmission period; a time-domain range formed from a first one of symbols to a last one of downlink symbols within the first TDD uplink-downlink transmission period; and a time-domain range formed from the first one of symbols to a last one of flexible symbols within the first TDD uplink-downlink transmission period.

In some embodiments, the second time-domain sub-range includes one of: all slots within the second TDD uplink-downlink transmission period; remaining slots other than uplink slots among all slots within the second TDD uplink-downlink transmission period; remaining slots other than first slots among all slots within the second TDD uplink-downlink transmission period, the first slots being slots including uplink symbols; downlink slots within the second TDD uplink-downlink transmission period; downlink slots and flexible slots within the second TDD uplink-downlink transmission period; all symbols within the second TDD uplink-downlink transmission period; remaining symbols other than uplink symbols among all symbols within the second TDD uplink-downlink transmission period; downlink symbols within the second TDD uplink-downlink transmission period; downlink symbols and flexible symbols within the second TDD uplink-downlink transmission period; a time-domain range formed from a first one of slots to a last one of downlink slots within the second TDD uplink-downlink transmission period; a time-domain range formed from the first one of slots to a last one of flexible slots within the second TDD uplink-downlink transmission period; a time-domain range formed from a first one of symbols to a last one of downlink symbols within the second TDD uplink-downlink transmission period; and a time-domain range formed from the first one of symbols to a last one of flexible symbols within the second TDD uplink-downlink transmission period.

In some embodiments, the first time-domain position information includes at least one of: a first start indication sub-value for indicating a start reference time unit group of the first uplink subband within the first time-domain sub-range; a first length indication sub-value for indicating a number of reference time unit groups of the first uplink subband within the first time-domain sub-range; a first end indication sub-value for indicating an end reference time unit group of the first uplink subband within the first time-domain sub-range; a second start indication sub-value for indicating a start reference time unit group of the first uplink subband within the second time-domain sub-range; a second length indication sub-value for indicating a number of reference time unit groups of the first uplink subband within the second time-domain sub-range; or a second end indication sub-value for indicating an end reference time unit group of the first uplink subband within the second time-domain sub-range.

In some embodiments, the second time-domain position information includes a first sub-bitmap, and/or a second sub-bitmap, the time-domain positions of the first uplink subband within the first time-domain sub-range are determined according to the first sub-bitmap, and each reference time unit group within the first time-domain range is in one-to-one correspondence with a respective bit in the first sub-bitmap.

The time-domain positions of the first uplink subband within the second time-domain sub-range are determined according to the second sub-bitmap, and each reference time unit group within the second time-domain range is in one-to-one correspondence with a respective bit in the second sub-bitmap.

In some embodiments, the apparatus further includes a receiving module 1930 configured to receive uplink data at the time-domain positions of the first uplink subband.

In some embodiments, the sending module 1910 is configured to perform operation 1610 and/or operation 1710.

In some embodiments, the receiving module 1930 is configured to perform operation 1730.

In summary, the apparatus provided by the embodiment of the disclosure supports determining the time-domain positions of the first uplink subband by one or more of the first period, the first subcarrier spacing, the first time-domain range, the reference time unit group, the first time-domain position information, and the second time-domain position information, which is very flexible, and is suitable for determining the time-domain positions of the first uplink subband in various communication scenarios. It not only supports low-complexity determination methods, but also meets the determination requirements in low-latency and high-capacity communication scenarios. By designing the above six aspects separately, a reliable and feasible solution is provided for determining the time-domain positions of the first uplink subband. The advantages of these six aspects when designed separately still exist when they are freely combined.

It should be noted that the apparatus provided in the embodiment is only illustrated by the division of the functional modules, and in practical application, the functions can be allocated to be implemented by different functional modules according to needs, that is, the internal structure of the apparatus can be divided into different functional modules to implement all or part of the functions described above.

With regard to the apparatus in the embodiment, the specific manner in which the various modules perform operations has been described in detail in the embodiments related to the method, and will not be described in detail here.

FIG. 20 illustrates a schematic structural diagram of a communication device (terminal device or network device) provided by some exemplary embodiments of the disclosure, and the communication device 2000 includes a processor 2001, a receiver 2002, a transmitter 2003, a memory 2004, and a bus 2005.

The processor 2001 includes one or more processing cores, and executes various functional applications and information processing by running software programs and modules. In some embodiments, the processor 2001 may be used to implement the functions and operations of the processing module 1830 described above.

The receiver 2002 and the transmitter 2003 may be implemented as a communication component, which may be a communication chip. In some embodiments, the receiver 2002 may be used to implement the functions and operations of the receiving module 1810 and/or the receiving module 1930 as described above. In some embodiments, the transmitter 2003 may be used to implement the functions and operations of the sending module 1850 and/or the sending module 1910 as described above.

The memory 2004 is connected to the processor 2001 via the bus 2005. The memory 2004 may be configured to store at least one instruction to be executed by the processor 2001 to implement the various operations in the method embodiments.

Further, the memory 2004 may be implemented by any type of volatile or non-volatile storage device or a combination thereof, which includes, but not limited to, magnetic or optical disk, Electrically Erasable Programmable Read-Only Memory (EEPROM), Erasable Programmable Read-Only Memory (EPROM), Static Random-Access Memory (SRAM), Read-Only Memory (ROM), magnetic memory, flash memory, Programmable Read-Only Memory (PROM).

In some embodiments, the receiver 2002 receives the signal/data independently, or the processor 2001 controls the receiver 2002 to receive the signal/data, or the processor 2001 requests the receiver 2002 to receive the signal/data, or the processor 2001 cooperates with the receiver 2002 to receive the signal/data.

In some embodiments, the transmitter 2003 transmits the signal/data independently, or the processor 2001 controls the transmitter 2003 to transmit the signal/data, or the processor 2001 requests the transmitter 2003 to transmit the signal/data, or the processor 2001 cooperates with the transmitter 2003 to transmit the signal/data.

In an exemplary embodiment of the disclosure, there is further provided a computer-readable storage medium having stored thereon at least section of programs loaded and executed by a processor to perform the method for determining time-domain positions according to various method embodiments above.

In an exemplary embodiment of the disclosure, there is further provided a chip including a programmable logic circuit or a program, the chip, when running one a communication device, being configured to perform the method for determining time-domain positions according to various method embodiments above.

In an exemplary embodiment of the disclosure, there is further provided a computer program product running on a processor of a computer device to cause the computer device to perform the method for determining time-domain positions according to various method embodiments above.

In an exemplary embodiment of the disclosure, there is further provided a computer program, including computer instructions executed by a processor of a computer device to cause the computer device to perform the method for determining time-domain positions according to various method embodiments above.

Those skilled in the art should recognize that in one or more of the examples described above, the functions described in the embodiments of the disclosure may be implemented in hardware, software, firmware, or any combination thereof. When implemented using software, these functions may be stored in a computer readable medium, or transmitted as one or more instructions or codes on a computer readable medium. The computer-readable medium includes a computer storage medium and a communication medium, wherein communication medium includes any medium that facilitates transfer of a computer program from one place to another. The storage medium may be any available medium accessible by a general-purpose or special-purpose computer.

The above describes only optional embodiments of the disclosure, and is not intended to limit the disclosure. Any modification, equivalent substitution, improvement and the like made within the spirit and principles of the disclosure should be included within the scope of protection of the disclosure.

## Claims

1. A method for determining time-domain positions, performed by a User Equipment (UE), the method comprising:

   receiving first configuration information, the first configuration information being used to determine time-domain positions of a first uplink subband,
   wherein the time-domain positions of the first uplink subband are determined according to at least one of: a first period, a first subcarrier spacing, a first time-domain range, a reference time unit group, first time-domain position information, or second time-domain position information.

2. The method of claim 1, wherein the first configuration information is used to determine the time-domain positions of the first uplink subband within the first period.

3. The method of claim 1 or 2, wherein the first period is determined according to a first Time Division Duplex (TDD) uplink-downlink transmission period, or the first period is determined according to the first TDD uplink-downlink transmission period and a first parameter X, X being an integer greater than 1.

4. The method of claim 3, wherein the first period is the first TDD uplink-downlink transmission period, or the first period is X times the first TDD uplink-downlink transmission period.

5. The method of claim 1 or 2, wherein the first period is determined according to a first TDD uplink-downlink transmission period and a second TDD uplink-downlink transmission period, or the first period is determined according to the first TDD uplink-downlink transmission period, the second TDD uplink-downlink transmission period and a second parameter Y, Y being an integer greater than 1.

6. The method of claim 5, wherein the first period is a sum of the first TDD uplink-downlink transmission period and the second TDD uplink-downlink transmission period, or the first period comprises Y times the sum of the first TDD uplink-downlink transmission period and the second TDD uplink-downlink transmission period.

7. The method of any one of claims 3 to 6, wherein the first TDD uplink-downlink transmission period and/or the second TDD uplink-downlink transmission period are configured by first signaling, the first signaling being used to configure TDD uplink and downlink common parameters.

8. The method of any one of claims 1 to 7, wherein the first period is configured by the first configuration information, or the first period is agreed by a communication protocol.

9. The method of any one of claims 1 to 8, wherein the first period satisfies at least one of: the UE expects the first period to be divisible by 20 ms; the UE expects the first period to be an integer multiple of a first TDD uplink-downlink transmission period; or the UE expects the first period to be an integer multiple of a sum of the first TDD uplink-downlink transmission period and a second TDD uplink-downlink transmission period.

10. The method of any one of claims 1 to 9, wherein the first subcarrier spacing is less than or equal to a second subcarrier spacing, wherein the second subcarrier spacing is configured by first signaling, and the first signaling is used to configure TDD uplink and downlink common parameters.

11. The method of any one of claims 1 to 9, wherein the first subcarrier spacing is less than or equal to a subcarrier spacing of a first Bandwidth Portion (BWP), wherein the first BWP comprises: any uplink BWP on a first carrier, and/or any downlink BWP on the first carrier, the first carrier being a carrier on which the first uplink subband is located.

12. The method according to any one of claims 1 to 11, wherein the first subcarrier spacing is configured by the first configuration information, or the first subcarrier spacing is agreed by a communication protocol.

13. The method of any one of claims 1 to 12, wherein the first configuration information is used to determine the time-domain positions of the first uplink subband within the first time-domain range in the first period.

14. The method of any one of claims 1 to 13, wherein the first time-domain position information comprises at least one of:

a first start indication value for indicating a start reference time unit group of the first uplink subband within the first time-domain range;
a first length indication value for indicating a number of reference time unit groups of the first uplink subband within the first time-domain range; or
a first end indication value for indicating an end reference time unit group of the first uplink subband within the first time-domain range.

15. The method of claim 14, wherein

the first start indication value is agreed by a communication protocol, and the first length indication value is configured by the first configuration information; or
the first start indication value is configured by the first configuration information, and the first length indication value is agreed by the communication protocol; or
the first start indication value and the first length indication value are configured by the first configuration information; or,
the first end indication value is agreed by the communication protocol, and the first length indication value is configured by the first configuration information; or
the first end indication value is configured by the first configuration information, and the first length indication value is agreed by the communication protocol; or,
the first end indication value and the first length indication value are configured by the first configuration information.

16. The method of any one of claims 1 to 13, wherein the second time-domain position information comprises a first bitmap, the time-domain positions of the first uplink subband within the first time-domain range in the first period are determined according to the first bitmap, and each reference time unit group within the first time-domain range is in one-to-one correspondence with a respective bit in the first bitmap.

17. The method of claim 16, wherein a number of bits in the first bitmap is agreed by a communication protocol, or configured by the first configuration information.

18. The method of claim 16 or 17, wherein
a number of time-domain units within one reference time unit group within the first time-domain range is determined according to a length of the first time-domain range and a number of bits in the first bitmap.

19. The method of claim 16, 17 or 18, wherein
a number of time-domain units within one reference time unit group within the first time-domain range is determined according to a quotient of a length of the first time-domain range and a number of bits in the first bitmap.

20. The method of claim 16, wherein a number of bits in the first bitmap is determined based on a length of the first time-domain range and a number of time-domain units within the reference time unit group.

21. The method of claim 20, wherein the number of bits in the first bitmap is determined according to a quotient of the length of the first time-domain range and the number of time-domain units within the reference time unit group.

22. The method of any one of claims 1 to 21, wherein
a number of time-domain units within the reference time unit group is agreed by a communication protocol, or configured by the first configuration information.

23. The method of any one of claims 1 to 22, wherein the reference time unit group comprises at least one of:

a first number of slots, the first number being an integer greater than or equal to 1;
a second number of sub-slots, the second number being an integer greater than or equal to 1;
a third number of symbols, the third number being an integer greater than or equal to 1; or
a fourth number of symbol groups, the fourth number being an integer greater than or equal to 1.

24. The method of any one of claims 1 to 23, wherein the first time-domain range is determined according to at least one of: the first period; the first subcarrier spacing; uplink slots within the first period; downlink slots within the first period; flexible slots within the first period; uplink symbols within the first period; downlink symbols within the first period; or flexible symbols within the first period.

25. The method of any one of claims 1 to 24, wherein the first time-domain range comprises one of:
all slots within the first period; remaining slots other than uplink slots among all slots within the first period; remaining slots other than first slots among all slots within the first period, the first slots being slots comprising uplink symbols; downlink slots within the first period; downlink slots and flexible slots within the first period; all symbols within the first period; remaining symbols other than uplink symbols among all symbols within the first period; downlink symbols within the first period; downlink symbols and flexible symbols within the first period; a time-domain range formed from a first one of slots to a last one of downlink slots within the first period; a time-domain range formed from the first one of slots to a last one of flexible slots within the first period; a time-domain range formed from a first one of symbols to a last one of downlink symbols within the first period; and a time-domain range formed from the first one of symbols to a last one of flexible symbols within the first period.

26. The method of any one of claims 1 to 25, wherein the first time-domain range comprises at least two time-domain sub-ranges, and one of the at least two time-domain sub-ranges is determined according to at least one of:
a first TDD uplink-downlink transmission period; a second TDD uplink-downlink transmission period; the first subcarrier spacing; uplink slots within the first TDD uplink-downlink transmission period; downlink slots within the first TDD uplink-downlink transmission period; flexible slots within the first TDD uplink-downlink transmission period; uplink symbols within the first TDD uplink-downlink transmission period; downlink symbols within the first TDD uplink-downlink transmission period; flexible symbols within the first TDD uplink-downlink transmission period; uplink slots within the second TDD uplink-downlink transmission period; downlink slots within the second TDD uplink-downlink transmission period; flexible slots within the second TDD uplink-downlink transmission period; uplink symbols within the second TDD uplink-downlink transmission period; downlink symbols within the second TDD uplink-downlink transmission period; or flexible symbols within the second TDD uplink-downlink transmission period.

27. The method of claim 26, wherein the at least two time-domain ranges comprise a first time-domain sub-range and a second time-domain sub-range, wherein the first time-domain sub-range is determined according to the first TDD uplink-downlink transmission period, and the second time-domain sub-range is determined according to the second TDD uplink-downlink transmission period.

28. The method of claim 27, wherein the first time-domain sub-range comprises one of:
all slots within the first TDD uplink-downlink transmission period; remaining slots other than uplink slots among all slots within the first TDD uplink-downlink transmission period; remaining slots other than first slots among all slots within the first TDD uplink-downlink transmission period, the first slots being slots comprising uplink symbols; downlink slots within the first TDD uplink-downlink transmission period; downlink slots and flexible slots within the first TDD uplink-downlink transmission period; all symbols within the first TDD uplink-downlink transmission period; remaining symbols other than uplink symbols among all symbols within the first TDD uplink-downlink transmission period; downlink symbols within the first TDD uplink-downlink transmission period; downlink symbols and flexible symbols within the first TDD uplink-downlink transmission period; a time-domain range formed from a first one of slots to a last one of downlink slots within the first TDD uplink-downlink transmission period; a time-domain range formed from the first one of slots to a last one of flexible slots within the first TDD uplink-downlink transmission period; a time-domain range formed from a first one of symbols to a last one of downlink symbols within the first TDD uplink-downlink transmission period; and a time-domain range formed from the first one of symbols to a last one of flexible symbols within the first TDD uplink-downlink transmission period.

29. The method of claim 27, wherein the second time-domain sub-range comprises one of:
all slots within the second TDD uplink-downlink transmission period; remaining slots other than uplink slots among all slots within the second TDD uplink-downlink transmission period; remaining slots other than first slots among all slots within the second TDD uplink-downlink transmission period, the first slots being slots comprising uplink symbols; downlink slots within the second TDD uplink-downlink transmission period; downlink slots and flexible slots within the second TDD uplink-downlink transmission period; all symbols within the second TDD uplink-downlink transmission period; remaining symbols other than uplink symbols among all symbols within the second TDD uplink-downlink transmission period; downlink symbols within the second TDD uplink-downlink transmission period; downlink symbols and flexible symbols within the second TDD uplink-downlink transmission period; a time-domain range formed from a first one of slots to a last one of downlink slots within the second TDD uplink-downlink transmission period; a time-domain range formed from the first one of slots to a last one of flexible slots within the second TDD uplink-downlink transmission period; a time-domain range formed from a first one of symbols to a last one of downlink symbols within the second TDD uplink-downlink transmission period; and a time-domain range formed from the first one of symbols to a last one of flexible symbols within the second TDD uplink-downlink transmission period.

30. The method of any one of claims 27 to 29, wherein the first time-domain position information comprises at least one of:

a first start indication sub-value for indicating a start reference time unit group of the first uplink subband within the first time-domain sub-range;
a first length indication sub-value for indicating a number of reference time unit groups of the first uplink subband within the first time-domain sub-range;
a first end indication sub-value for indicating an end reference time unit group of the first uplink subband within the first time-domain sub-range;
a second start indication sub-value for indicating a start reference time unit group of the first uplink subband within the second time-domain sub-range;
a second length indication sub-value for indicating a number of reference time unit groups of the first uplink subband within the second time-domain sub-range; or
a second end indication sub-value for indicating an end reference time unit group of the first uplink subband within the second time-domain sub-range.

31. The method of any one of claims 27 to 29, wherein the second time-domain position information comprises a first sub-bitmap, and/or a second sub-bitmap,

wherein the time-domain positions of the first uplink subband within the first time-domain sub-range are determined according to the first sub-bitmap, and each reference time unit group within the first time-domain range is in one-to-one correspondence with a respective bit in the first sub-bitmap;
the time-domain positions of the first uplink subband within the second time-domain sub-range are determined according to the second sub-bitmap, and each reference time unit group within the second time-domain range is in one-to-one correspondence with a respective bit in the second sub-bitmap.

32. The method of any one of claims 1 to 31, wherein in a case where the time-domain positions of the first uplink subband determined according to the first configuration information comprise a first reference time unit group,

the method further comprises at least one of: ignoring the first configuration information; ignoring configuration information for the first reference time unit group in the first configuration information; or ignoring configuration information for uplink time-domain units within the first reference time unit group in the first configuration information,
wherein the first reference time unit group satisfies at least one of: the first reference time unit group does not comprises the first uplink subband; the uplink time-domain units within the first reference time unit group do not comprise the first uplink subband; the UE does not expect the time-domain positions of the first uplink subband determined according to the first time-domain position information to comprise the first reference time unit group; or the UE does not expect the time-domain positions of the first uplink subband determined according to the second time-domain position information to comprise the first reference time unit group,
wherein the first reference time unit group comprises the uplink time-domain units.

33. A method for determining time-domain positions, performed by a network device, the method comprising:

sending first configuration information, the first configuration information being used to determine time-domain positions of a first uplink subband,
wherein the time-domain positions of the first uplink subband are determined according to at least one of: a first period, a first subcarrier spacing, a first time-domain range, a reference time unit group, first time-domain position information, or second time-domain position information.

34. The method of claim 33, wherein the first configuration information is used to determine the time-domain positions of the first uplink subband within the first period.

35. The method of claim 33 or 34, wherein the first period is determined according to a first Time Division Duplex (TDD) uplink-downlink transmission period, or the first period is determined according to the first TDD uplink-downlink transmission period and a first parameter X, X being an integer greater than 1.

36. The method of claim 35, wherein the first period is the first TDD uplink-downlink transmission period, or the first period is X times the first TDD uplink-downlink transmission period.

37. The method of claim 33 or 34, wherein the first period is determined according to a first TDD uplink-downlink transmission period and a second TDD uplink-downlink transmission period, or the first period is determined according to the first TDD uplink-downlink transmission period, the second TDD uplink-downlink transmission period and a second parameter Y, Y being an integer greater than 1.

38. The method of claim 37, wherein the first period is a sum of the first TDD uplink-downlink transmission period and the second TDD uplink-downlink transmission period, or the first period comprises Y times the sum of the first TDD uplink-downlink transmission period and the second TDD uplink-downlink transmission period.

39. The method of any one of claims 35 to 38, wherein the first TDD uplink-downlink transmission period and/or the second TDD uplink-downlink transmission period are configured by first signaling, the first signaling being used to configure TDD uplink and downlink common parameters.

40. The method of any one of claims 33 to 39, wherein the first period is configured by the first configuration information, or the first period is agreed by a communication protocol.

41. The method of any one of claims 33 to 40, wherein the first period satisfies at least one of: the UE expects the first period to be divisible by 20 ms; the UE expects the first period to be an integer multiple of a first TDD uplink-downlink transmission period; or the UE expects the first period to be an integer multiple of a sum of the first TDD uplink-downlink transmission period and a second TDD uplink-downlink transmission period.

42. The method of any one of claims 33 to 41, wherein the first subcarrier spacing is less than or equal to a second subcarrier spacing, wherein the second subcarrier spacing is configured by first signaling, and the first signaling is used to configure TDD uplink and downlink common parameters.

43. The method of any one of claims 33 to 41, wherein the first subcarrier spacing is less than or equal to a subcarrier spacing of a first Bandwidth Portion (BWP), wherein the first BWP comprises: any uplink BWP on a first carrier, and/or any downlink BWP on the first carrier, the first carrier being a carrier on which the first uplink subband is located.

44. The method according to any one of claims 33 to 43, wherein the first subcarrier spacing is configured by the first configuration information, or the first subcarrier spacing is agreed by a communication protocol.

45. The method of any one of claims 33 to 44, wherein the first configuration information is used to determine the time-domain positions of the first uplink subband within the first time-domain range in the first period.

46. The method of any one of claims 33 to 45, wherein the first time-domain position information comprises at least one of:

a first start indication value for indicating a start reference time unit group of the first uplink subband within the first time-domain range;
a first length indication value for indicating a number of reference time unit groups of the first uplink subband within the first time-domain range; or
a first end indication value for indicating an end reference time unit group of the first uplink subband within the first time-domain range.

**47.** The method of claim 46, wherein

the first start indication value is agreed by a communication protocol, and the first length indication value is configured by the first configuration information; or

the first start indication value is configured by the first configuration information, and the first length indication value is agreed by the communication protocol; or

the first start indication value and the first length indication value are configured by the first configuration information; or,

the first end indication value is agreed by the communication protocol, and the first length indication value is configured by the first configuration information; or

the first end indication value is configured by the first configuration information, and the first length indication value is agreed by the communication protocol; or,

the first end indication value and the first length indication value are configured by the first configuration information.

**48.** The method of any one of claims 33 to 45, wherein the second time-domain position information comprises a first bitmap, the time-domain positions of the first uplink subband within the first time-domain range in the first period are determined according to the first bitmap, and each reference time unit group within the first time-domain range is in one-to-one correspondence with a respective bit in the first bitmap.

**49.** The method of claim 48, wherein a number of bits in the first bitmap is agreed by a communication protocol, or configured by the first configuration information.

**50.** The method of claim 48 or 49, wherein

a number of time-domain units within one reference time unit group within the first time-domain range is determined according to a length of the first time-domain range and a number of bits in the first bitmap.

**51.** The method of claim 48, 49 or 50, wherein

a number of time-domain units within one reference time unit group within the first time-domain range is determined according to a quotient of a length of the first time-domain range and a number of bits in the first bitmap.

**52.** The method of claim 48, wherein a number of bits in the first bitmap is determined based on a length of the first time-domain range and a number of time-domain units within the reference time unit group.

**53.** The method of claim 48 or 52, wherein the number of bits in the first bitmap is determined according to a quotient of the length of the first time-domain range and the number of time-domain units within the reference time unit group.

**54.** The method of any one of claims 33 to 53, wherein

a number of time-domain units within the reference time unit group is agreed by a communication protocol, or configured by the first configuration information.

**55.** The method of any one of claims 33 to 54, wherein the reference time unit group comprises at least one of:
a first number of slots, the first number being an integer greater than or equal to 1; a second number of sub-slots, the second number being an integer greater than or equal to 1; a third number of symbols, the third number being an integer greater than or equal to 1; or a fourth number of symbol groups, the fourth number being an integer greater than or equal to 1.

**56.** The method of any one of claims 33 to 55, wherein the first time-domain range is determined according to at least one of:
the first period; the first subcarrier spacing; uplink slots within the first period; downlink slots within the first period; flexible slots within the first period; uplink symbols within the first period; downlink symbols within the first period; or flexible symbols within the first period.

**57.** The method of any one of claims 33 to 56, wherein the first time-domain range comprises one of:
all slots within the first period; remaining slots other than uplink slots among all slots within the first period; remaining slots other than first slots among all slots within the first period, the first slots being slots comprising uplink symbols; downlink slots within the first period; downlink slots and flexible slots within the first period; all symbols within the first period; remaining symbols other than uplink symbols among all symbols within the first period; downlink symbols within the first period; downlink symbols and flexible symbols within the first period; a time-domain range formed from a first one of slots to a last one of downlink slots within the first period; a time-domain range formed from the first one of slots to a last one of flexible slots within the first period; a time-domain range formed from a first one of symbols to a last one of downlink symbols within the first period; and a time-domain range formed from the first one of symbols to a last one of flexible symbols within the first period.

58. The method of any one of claims 33 to 57, wherein the first time-domain range comprises at least two time-domain sub-ranges, and one of the at least two time-domain sub-ranges is determined according to at least one of:
a first TDD uplink-downlink transmission period; a second TDD uplink-downlink transmission period; the first subcarrier spacing; uplink slots within the first TDD uplink-downlink transmission period; downlink slots within the first TDD uplink-downlink transmission period; flexible slots within the first TDD uplink-downlink transmission period; uplink symbols within the first TDD uplink-downlink transmission period; downlink symbols within the first TDD uplink-downlink transmission period; flexible symbols within the first TDD uplink-downlink transmission period; uplink slots within the second TDD uplink-downlink transmission period; downlink slots within the second TDD uplink-downlink transmission period; flexible slots within the second TDD uplink-downlink transmission period; uplink symbols within the second TDD uplink-downlink transmission period; downlink symbols within the second TDD uplink-downlink transmission period; or flexible symbols within the second TDD uplink-downlink transmission period.

59. The method of claim 58, wherein the at least two time-domain ranges comprise a first time-domain sub-range and a second time-domain sub-range, wherein the first time-domain sub-range is determined according to the first TDD uplink-downlink transmission period, and the second time-domain sub-range is determined according to the second TDD uplink-downlink transmission period.

60. The method of claim 59, wherein the first time-domain sub-range comprises one of:
all slots within the first TDD uplink-downlink transmission period; remaining slots other than uplink slots among all slots within the first TDD uplink-downlink transmission period; remaining slots other than first slots among all slots within the first TDD uplink-downlink transmission period, the first slots being slots comprising uplink symbols; downlink slots within the first TDD uplink-downlink transmission period; downlink slots and flexible slots within the first TDD uplink-downlink transmission period; all symbols within the first TDD uplink-downlink transmission period; remaining symbols other than uplink symbols among all symbols within the first TDD uplink-downlink transmission period; downlink symbols within the first TDD uplink-downlink transmission period; downlink symbols and flexible symbols within the first TDD uplink-downlink transmission period; a time-domain range formed from a first one of slots to a last one of downlink slots within the first TDD uplink-downlink transmission period; a time-domain range formed from the first one of slots to a last one of flexible slots within the first TDD uplink-downlink transmission period; a time-domain range formed from a first one of symbols to a last one of downlink symbols within the first TDD uplink-downlink transmission period; and a time-domain range formed from the first one of symbols to a last one of flexible symbols within the first TDD uplink-downlink transmission period.

61. The method of claim 59, wherein the second time-domain sub-range comprises one of:
all slots within the second TDD uplink-downlink transmission period; remaining slots other than uplink slots among all slots within the second TDD uplink-downlink transmission period; remaining slots other than first slots among all slots within the second TDD uplink-downlink transmission period, the first slots being slots comprising uplink symbols; downlink slots within the second TDD uplink-downlink transmission period; downlink slots and flexible slots within the second TDD uplink-downlink transmission period; all symbols within the second TDD uplink-downlink transmission period; remaining symbols other than uplink symbols among all symbols within the second TDD uplink-downlink transmission period; downlink symbols within the second TDD uplink-downlink transmission period; downlink symbols and flexible symbols within the second TDD uplink-downlink transmission period; a time-domain range formed from a first one of slots to a last one of downlink slots within the second TDD uplink-downlink transmission period; a time-domain range formed from the first one of slots to a last one of flexible slots within the second TDD uplink-downlink transmission period; a time-domain range formed from a first one of symbols to a last one of downlink symbols within the second TDD uplink-downlink transmission period; and a time-domain range formed from the first one of symbols to a last one of flexible symbols within the second TDD uplink-downlink transmission period.

62. The method of any one of claims 59 to 61, wherein the first time-domain position information comprises at least one of:

   a first start indication sub-value for indicating a start reference time unit group within the first time-domain sub-range;
   a first length indication sub-value for indicating a number of reference time unit groups within the first time-domain sub-range;

a first end indication sub-value for indicating an end reference time unit group within the first time-domain sub-range;

a second start indication sub-value for indicating a start reference time unit group within the second time-domain sub-range;

a second length indication sub-value for indicating a number of reference time unit groups within the second time-domain sub-range; or

a second end indication sub-value for indicating an end reference time unit group within the second time-domain sub-range.

63. The method of any one of claims 59 to 61, wherein the second time-domain position information comprises a first sub-bitmap, and/or a second sub-bitmap,

wherein the time-domain positions of the first uplink subband within the first time-domain sub-range are determined according to the first sub-bitmap, and each reference time unit group within the first time-domain range is in one-to-one correspondence with a respective bit in the first sub-bitmap;

the time-domain positions of the first uplink subband within the second time-domain sub-range are determined according to the second sub-bitmap, and each reference time unit group within the second time-domain range is in one-to-one correspondence with a respective bit in the second sub-bitmap.

64. An apparatus for determining time-domain positions, comprising:

a receiving module, configured to receive first configuration information, the first configuration information being used to determine time-domain positions of a first uplink subband,

wherein the time-domain positions of the first uplink subband are determined according to at least one of: a first period, a first subcarrier spacing, a first time-domain range, a reference time unit group, first time-domain position information, or second time-domain position information.

65. An apparatus for determining time-domain positions, comprising:

a sending module, configured to send first configuration information, the first configuration information being used to determine time-domain positions of a first uplink subband,

wherein the time-domain positions of the first uplink subband are determined according to at least one of: a first period, a first subcarrier spacing, a first time-domain range, a reference time unit group, first time-domain position information, or second time-domain position information.

66. A terminal device. comprising:

a processor; a transceiver coupled to the processor; and a memory for storing instructions executable by the processor,

wherein the processor is configured to load and execute the instructions to perform the method for determining time-domain positions of any one of claims 1 to 32.

67. A network device. comprising:

a processor; a transceiver coupled to the processor; and a memory for storing instructions executable by the processor,

wherein the processor is configured to load and execute the instructions to perform the method for determining time-domain positions of any one of claims 33 to 63.

68. A computer-readable storage medium having stored thereon executable instructions loaded and executed by a processor to perform the method for determining time-domain positions of any one of claims 1 to 32, or the method for determining time-domain positions of any one of claims 33 to 63.

69. A chip, comprising a programmable logic circuit or a program, the chip being configured to perform the method for determining time-domain positions of any one of claims 1 to 32, or the method for determining time-domain positions of any one of claims 33 to 63.

**70.** A computer program product, comprising computer instructions stored in a computer-readable storage medium from which a processor of a computer device reads the computer instructions, wherein the processor executes the computer instructions to cause the computer device to perform the method for determining time-domain positions of any one of claims 1 to 32, or the method for determining time-domain positions of any one of claims 33 to 63.

**71.** A computer program, comprising computer instructions executed by a processor of a computer device to cause the computer device to perform the method for determining time-domain positions of any one of claims 1 to 32, or the method for determining time-domain positions of any one of claims 33 to 63.

| Downlink subband | Uplink subband |
| Uplink subband | Downlink subband |
| Downlink subband | |

Downlink time-domain unit
(a)

Downlink time-domain unit
(b)

**FIG. 1**

110

Uplink

120

Downlink

130

First sidelink

Second sidelink

**FIG. 2**

310

First configuration information is received, the first configuration information being used to determine time-domain positions of a first uplink subband

**FIG. 3**

First configuration information is received, the first configuration information being used to determine time-domain positions of a first uplink subband, where the time-domain positions of the first uplink subband are determined according to at least one of: a first period, a first subcarrier spacing, a first time-domain range, a reference time unit group, first time-domain position information, or second time-domain position information

410

Uplink transmission is performed on the first uplink subband according to the time-domain positions of the first uplink subband

430

**FIG. 4**

First period

First TDD uplink-downlink transmission period

**FIG. 5**

First period

P1    P2

**FIG. 6**

One reference time unit group

(a)

Slot N1 — Slot N2 — Slot N3

One reference time unit group

(b)

Slot N1 — Slot N2 — Slot N3 — Slot N4

**FIG. 7**

One reference time unit group   One reference time unit group

$1^{st}$ P1 — $1^{st}$ P2 — $2^{nd}$ P1 — $2^{nd}$ P2

First period

**FIG. 8**

First period

DL symbol  Flexible symbol  UL symbol

2 DL symbols  6 DL symbols

Slot 0 (DL slot) — Slot 1 (DL slot) — Slot 2 (DL slot) — Slot 3 (Flexible slot) — Slot 4 (UL slot)

First time-domain range includes all slots within first period / First time-domain range includes all symbols within first period / M=5 slots / M=70 symbols

First time-domain range includes remaining slots other than uplink slots among all time slots in first period / M=4 slots / M=56 symbols / First time-domain range includes downlink slots and flexible slots within first period / First time-domain range includes time-domain range formed from first one of slots to last one of flexible slots

First time-domain range includes downlink slots in first period / M=3 slots / M=42 symbols / First time-domain range includes remaining slots other than first slots among all slots in first period / First time-domain range includes time-domain range formed from first one of slots to last one of downlink slots

First time-domain range includes remaining symbols other than uplink symbols among all symbols in first period / M=50 symbols / First time-domain range includes downlink symbols and flexible symbols within first period / First time-domain range includes time-domain range formed from first one of symbols to last one of flexible symbols

First time-domain range includes downlink symbols within first period / M=44 symbols / First time-domain range includes time-domain range formed from first one of symbols to last one of downlink symbols

FIG. 9

51

FIG. 10

First period

DL symbol   Flexible symbol   UL symbol

First TDD UL-DL transmission period   Second TDD UL-DL transmission period

Slot 0 (DL slot)   Slot 1 (Flexible slot)   Slot 2 (UL slot)   Slot 3 (DL slot)   Slot 4 (Flexible slot)

$M_1=T_1*2^\mu =3$ slots / $M_1=T_1*2^\mu *14=42$ symbols

$M_2=T_2*2^\mu =2$ slots / $M_2=T_2*2^\mu *14=28$ symbols

$M_1=3-1=2$ slots / $M_1=42-14=28$ symbols

$M_2=14+10=28-4=24$ symbols

$M_1=14+8=22$ symbols

$M_2=1$ slot / $M_2=14$ symbols

$M_1=14+2=16$ symbols

$M_1=1$ slot / $M_1=14$ symbols

EP 4 742 790 A1

First period

DL symbol  Flexible symbol  UL symbol

1st P1  2nd P1  3rd P1

Slot 0 (DL slot)  Slot 1 (Flexible slot)  Slot 2 (DL slot)  Slot 3 (Flexible slot)  Slot 4 (DL slot)  Slot 5 (Flexible slot)

From first one of slots in first one of P1s to last one of downlink slots in last one of P1s

From first one of symbols in first one of P1s to last one of downlink symbols in last one of P1s

From first one of slots in first one of P1s to last one of flexible slots in last one of P1s

From first one of symbols in first one of P1s to last one of flexible symbols in last one of P1s

FIG. 11

EP 4 742 790 A1

FIG. 12

FIG. 13

50 symbols

5 symbols                    4 symbols

|←B0→|←—B1—→|←B2→|    |←B10→|←B11→|

**FIG. 14**

50 symbols

2 symbols                    6 symbols

B0    B1    B2                    B8

**FIG. 15**

1610

First configuration information is sent, the first
configuration information being used to indicate time-
domain positions of a first uplink subband

**FIG. 16**

First configuration information is sent, the first configuration information being used to indicate time-domain positions of a first uplink subband, where the time-domain positions of the first uplink subband are determined according to at least one of: a first period, a first subcarrier spacing, a first time-domain range, a reference time unit group, first time-domain position information, or second time-domain position information
1710

↓

Uplink data are received at the time-domain positions of the first uplink subband
1730

**FIG. 17**

Receiving module   1810

┆

Processing module   1830

┆

Sending module   1850

**FIG. 18**

Sending module   1910

┆

Receiving module   1930

**FIG. 19**

Communication device 2000

Processor   2001        Transmitter   2003

2005

Bus

Receiver   2002        Memory   2004

**FIG. 20**

## INTERNATIONAL SEARCH REPORT

| | International application No. |
|---|---|
| | **PCT/CN2023/130840** |

| A. | CLASSIFICATION OF SUBJECT MATTER |
|---|---|

H04W 72/0446(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, DWPI, CNKI, IEEE: 时域, 位置, 配置, 指示, 子带, 上行, 周期, 子载波, 间隔, 范围, 时间单元, 第二, 时分双工, 传输周期, 参数, 协议, 长度, indicator, sub-carrier, TDD, location, position, sub-band, time domain, tdd-UL-DL-Configuration

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 116326103 A (BEIJING XIAOMI MOBILE SOFTWARE CO., LTD.) 23 June 2023 (2023-06-23)<br>    description, paragraphs 104-396 | 1-71 |
| X | CN 116261898 A (BEIJING XIAOMI MOBILE SOFTWARE CO., LTD.) 13 June 2023 (2023-06-13)<br>    description, paragraphs 105-307 | 1-71 |
| A | CN 116346546 A (HUAWEI TECHNOLOGIES CO., LTD.) 27 June 2023 (2023-06-27)<br>    entire document | 1-71 |
| A | WO 2023211259 A1 (WILUS INSTITUTE OF STANDARDS AND TECHNOLOGY INC.)<br>02 November 2023 (2023-11-02)<br>    entire document | 1-71 |
| A | VIVO. "Feature Lead Summary on Configured Grant Enhancement"<br>*3GPP TSG RAN WG1#97, R1-1907670*, 17 May 2019 (2019-05-17),<br>    entire document | 1-71 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 July 2024** | **23 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/130840**

| Patent document cited in search report | | | Publication date (day/month/year) | Patent family member(s) | | | Publication date (day/month/year) |
|---|---|---|---|---|---|---|---|
| CN | 116326103 | A | 23 June 2023 | None | | | |
| CN | 116261898 | A | 13 June 2023 | None | | | |
| CN | 116346546 | A | 27 June 2023 | WO | 2023116809 | A1 | 29 June 2023 |
| WO | 2023211259 | A1 | 02 November 2023 | None | | | |

Form PCT/ISA/210 (patent family annex) (July 2022)